# FASCICULE DE BREVET EUROPEEN

(11) **EP 3 718 258 B1**
(45) Date de publication et mention de la délivrance du brevet: **04.09.2024**
(21) Numéro de dépôt: 18822426.5
(22) Date de dépôt: 21.11.2018
(51) Int. Cl.: H04L 41/08, H04L 45/033

(54) **PROCÉDÉ DE CONFIGURATION DESTINÉ À ÊTRE MIS EN OEUVRE DANS UN RÉSEAU UTILISANT UN PROTOCOLE DE ROUTAGE DYNAMIQUE**
KONFIGURATIONSVERFAHREN FÜR EIN NETZWERK MIT EIN DYNAMIC ROUTING PROTOKOLL
CONFIGURATION METHOD FOR A NETWORK USING A DYNAMIC ROUTING PROTOCOL

(30) Priorité: 28.11.2017 FR 1761305
(43) Date de publication de la demande: 07.10.2020
(73) Titulaire: Orange, 92130 Issy-les-Moulineaux (FR)
(72) Inventeur: BOUCADAIR, Mohamed, 92326 Châtillon Cedex (FR); JACQUENET, Christian, 92326 Châtillon Cedex (FR)
(74) Mandataire: Cabinet Beau de Loménie
(86) Numéro de dépôt international: PCT/FR2018/052933
(87) Numéro de publication internationale: WO 2019/106259

(56) Documents cités:
- US-A1- 2014 181 292
- US-A1- 2015 229 512
- US-A1- 2016 294 612
- US-A1- 2017 163 532
- LINDEM CISCO SYSTEMS K PATEL ARRCUS A ET AL: "BGP Logical Link Discovery Protocol (LLDP) Peer Discovery; draft-acee-idr-lldp-peer-discovery-01.txt", BGP LOGICAL LINK DISCOVERY PROTOCOL (LLDP) PEER DISCOVERY; DRAFT-ACEE-IDR-LLDP-PEER-DISCOVERY-01.TXT; INTERNET-DRAFT: NETWORK WORKING GROUP, INTERNET ENGINEERING TASK FORCE, IETF; STANDARDWORKINGDRAFT, INTERNET SOCIETY (ISOC) 4, RUE DES FALAISES CH-, no. 1, 3 July 2017 (2017-07-03), pages 1 - 16, XP015120697

## Description

### Arrière-plan de l'invention

L'invention se rapporte au domaine général des télécommunications.

Elle concerne plus particulièrement la configuration de dispositifs d'un réseau de télécommunications mettant en oeuvre un protocole de routage dynamique, tel que le protocole BGP (Border Gateway Protocol), OSPF (Open Shortest Path First) ou encore IS-IS (Intermediate System to Intermediate System), pour le calcul, la sélection et l'établissement de routes destinées à acheminer le trafic dans le réseau.

De tels protocoles de routage sont couramment utilisés dans les réseaux de télécommunications pour communiquer des informations de routage entre différents systèmes autonomes (ou AS pour Autonomous System en anglais). Typiquement le réseau Internet est constitué actuellement de plusieurs dizaines de milliers de systèmes autonomes, chacun étant exploité par une entité administrative spécifique, appelée opérateur ou administrateur de réseau. Chaque système autonome est identifié par un numéro globalement unique appelé numéro de système autonome ou numéro d'AS (ou encore ASN pour AS Number en anglais).

Le protocole BGP est de plus en plus utilisé aujourd'hui dans les infrastructures réseau (aussi désignées plus simplement dans la suite par « réseaux ») sur lesquelles s'appuient les centres de données (« Data Centers », ou DC en anglais), et notamment les centres de données de taille importante, aussi connus sous le nom de MSDC (Massively Scalable Data Centers) ou HSDC (Hyper-Scale Data Centers). Le protocole BGP permet au sein de ces infrastructures réseau d'échanger des informations de routage entre les différents équipements du réseau (par exemple routeurs, contrôleurs, ou commutateurs). L'infrastructure réseau d'un centre de données peut constituer un système autonome à part entière ou être organisée selon un ensemble de systèmes autonomes, qui peuvent par exemple former une « confédération BGP » lorsque l'infrastructure est massivement distribuée. Au sein d'une telle infrastructure réseau, des numéros d'AS privés, c'est-à-dire non visibles de l'Internet, sont souvent utilisés pour faciliter la gestion de la politique de routage BGP sans devoir requérir l'attribution d'un numéro d'AS globalement unique. Ceci permet de distinguer plus facilement l'infrastructure réseau du centre de données à proprement parler, du réseau auquel cette infrastructure est connectée et auquel un numéro d'AS distinct est affecté. Au sein de l'infrastructure réseau du centre de données, un même numéro d'AS peut par exemple être utilisé par plusieurs routeurs situés sur un même niveau hiérarchique. Aussi, des extensions BGP spécifiques aux centres de données (par ex. « allowas-in ») ont été développées par certains constructeurs pour pouvoir utiliser un même numéro d'AS dans des niveaux hiérarchiques différents.

Le déploiement d'un centre de données nécessite un niveau d'automatisation des processus de production de ressources (par ex. production dynamique de machines virtuelles destinées à héberger certaines fonctions réseau virtualisées) hautement élevé, afin de simplifier les procédures de configuration des équipements de l'infrastructure réseau du centre de données et d'en minimiser les risques d'erreur. Une telle automatisation permet en outre d'améliorer la disponibilité et la stabilité du réseau : toute modification de la topologie de l'infrastructure réseau liée à l'introduction de nouvelles ressources de commutation (par exemple commutateurs, routeurs) ou de transmission (par exemple liens intra- et inter-centres de données destinés à fournir plus de capacité pour écouler plus de trafic) doit se faire d'une manière dynamique et requérant un effort de configuration minimal, voire nul.

De plus, il est important de maîtriser la volumétrie du trafic de signalisation constitué notamment des informations de configuration émises au sein de l'infrastructure réseau, typiquement par un ou plusieurs contrôleurs réseau lorsque le centre de données s'appuie sur une architecture de type Software-Defined Networking (SDN), par exemple. Ce trafic de signalisation peut également comprendre des notifications émises par certains équipements du réseau lorsqu'ils détectent une modification de sa topologie, par exemple la rupture d'une connexion entre deux commutateurs (switch, en anglais) localisés au sein d'un même centre de données. Il est impératif de s'assurer que la volumétrie du trafic de signalisation échangé ne pénalise en aucune manière la disponibilité du ou des services qui impliquerai(en)t des ressources hébergées au sein de l'infrastructure du centre de données.

Afin d'optimiser l'exploitation des ressources au sein d'un centre de données, la configuration des équipements du réseau sous-jacent doit se conformer à des procédures adéquates de nomenclature des interfaces, des adresses allouées à ces interfaces, etc. En particulier, la mise en place d'une politique de routage au sein de l'infrastructure réseau du centre de données selon un protocole de routage tel que BGP, repose sur l'établissement de sessions BGP entre les différents équipements du réseau. Ces sessions sont établies sur la base de différentes informations de configuration telles que le numéro d'AS auquel appartient chaque équipement : le numéro d'AS est une information obligatoire pour pouvoir établir une session BGP entre deux routeurs. En effet, si un routeur BGP n'a pas la connaissance du numéro du système autonome auquel il appartient, il est incapable d'établir une session BGP avec un autre routeur appartenant à un système autonome voisin, mais également avec les autres routeurs du système autonome auquel il appartient. L'établissement de sessions BGP entre tous les équipements d'un système utonome est impératif pour garantir une vision globale et cohérente de la topologie de l'infrastructure réseau, et le numéro d'AS conditionne l'établissement de telles sessions. On note par ailleurs que ce numéro d'AS est également utilisé pour sélectionner les routes BGP et pour la détection et la prévention de boucles de routage au sein de l'infrastructure réseau.

Le document US2017/163532 A1 décrit un système de réseau comprenant un premier ensemble de machines hôtes qui hébergent des machines virtuelles qui se connectent les unes aux autres via un réseau logique. Le système de réseau comprend un deuxième ensemble de machines hôtes pour héberger des conteneurs virtualisés qui fonctionnent comme des passerelles pour transférer des données entre les machines virtuelles et un réseau externe. Au moins l'un des conteneurs virtualisés est associé avec au moins un routeur physique dans le réseau externe afin de publier les adresses des machines virtuelles auprès du routeur physique. Le protocole BGP est utilisé par chaque machine hôte de la seconde pluralité de machines hôtes pour annoncer la passerelle hébergée sur cette machine hôte. Le document US2015/229512 divulgue un procédé de communication d'informations dans lequel ces informations sont véhiculées en utilisant un protocole de routage déjà activé. Des éléments de configuration sont propagés en modifiant des messages échangés par l'intermédiaire d'un protocole de routage du réseau, donc le protocole de routage est déjà activé dans le réseau.

Dans l'état actuel de la technique, le processus de configuration des fonctions caractéristiques de l'activation d'un protocole de routage dynamique tel que BGP au sein d'une infrastructure réseau (d'un centre de données, ou de n'importe quelle autre infrastructure réseau), requiert la configuration explicite de chaque équipement du réseau par l'opérateur du réseau. Cette configuration est réalisée via la programmation par l'opérateur du réseau d'une pluralité de tâches élémentaires ; ces tâches élémentaires consistent en ce que l'administrateur du réseau se connecte à chaque équipement du réseau afin de configurer l'ensemble des paramètres dont chaque équipement a besoin pour l'établissement de sessions BGP avec ses pairs. Une telle procédure de configuration est complexe et nécessite donc une intervention humaine souvent chronophage, avec des risques d'erreurs élevés qui peuvent s'avérer préjudiciables (par exemple, en pénalisant l'accès au centre de données ou à un sous-ensemble d'équipements du centre). Particulièrement, les pairs BGP doivent disposer de leur propre numéro d'AS, des numéros d'AS de leurs voisins, de l'adresse (ou des adresses) IP des voisins, ainsi que d'une instruction explicite pour activer le protocole BGP.

Il existe donc un besoin d'un processus de configuration automatique des équipements d'un réseau pour qu'ils puissent activer un protocole de routage dynamique tel que BGP. Un tel processus permettrait non seulement de réduire de manière significative les temps consacrés à la configuration des équipements, mais également de limiter sensiblement les risques d'erreurs auxquels des procédures de configuration complexes sont souvent exposées.

### Objet et résumé de l'invention

La portée de l'invention est définie par les revendications indépendantes annexées. D'autres modes de réalisation sont définies dans leurs revendications dépendantes respectives.

L'invention répond notamment à ce besoin en proposant un procédé de configuration destiné à être mis en oeuvre dans un réseau comprenant une pluralité de dispositifs et utilisant un protocole de routage dynamique, ce procédé de configuration comprenant :
- une étape de réception, par un premier dispositif du réseau, d'un premier message de commande comprenant des éléments de configuration requis pour l'activation du protocole de routage dynamique dans le réseau de sorte à rendre son utilisation opérationnelle dans le réseau;
- une étape de configuration par le premier dispositif de paramètres d'établissement de sessions selon ledit protocole utilisés par le premier dispositif à partir d'éléments de configuration compris dans le premier message ;
- si les éléments de configuration compris dans le premier message comprennent en outre au moins une instruction de gestion de sessions selon ledit protocole dans le réseau, une étape d'exécution par le premier dispositif de ladite au moins une instruction de gestion ; et
- si les éléments de configuration compris dans le premier message comprennent une consigne de propagation des éléments de configuration dans le réseau, une étape d'envoi par le premier dispositif conformément à ladite consigne de propagation d'au moins un deuxième message de commande vers au moins un deuxième dispositif du réseau, ce deuxième message de commande comprenant tout ou partie des éléments de configuration compris dans le premier message.

Corrélativement, l'invention vise également un dispositif d'un réseau comprenant une pluralité de dispositifs et utilisant un protocole de routage dynamique, ce dispositif, dit premier dispositif, comprenant :
- un module de réception apte à recevoir un premier message de commande comprenant des éléments de configuration requis pour l'activation du protocole de routage dynamique dans le réseau de sorte à rendre son utilisation opérationnelle dans le réseau;
- un module de configuration adapté à configurer des paramètres d'établissement de sessions selon ledit protocole utilisés par le premier dispositif à partir d'éléments de configuration compris dans le premier message ;
- un module d'exécution configuré, si les éléments de configuration compris dans le premier message comprennent au moins une instruction de gestion de sessions selon ledit protocole dans le réseau, pour exécuter ladite au moins une instruction de gestion ; et
- un module de propagation, activé si les éléments de configuration compris dans le premier message comprennent une consigne de propagation des éléments de configuration dans le réseau, ledit module de propagation étant configuré pour envoyer au moins un deuxième message de commande vers au moins un deuxième dispositif du réseau conformément à ladite consigne de propagation, ce deuxième message de commande comprenant tout ou partie des éléments de configuration compris dans le premier message.

Autrement dit, l'invention propose un mécanisme automatique de configuration permettant l'activation du protocole de routage dynamique au sein du réseau, et distribué sur l'ensemble des dispositifs du réseau. Le premier dispositif reçoit, via un message de commande, des éléments de configuration qu'il extrait et exécute, puis transmet, en fonction des instructions véhiculées dans le message de commande qu'il a reçu, des éléments de configuration à au moins un deuxième dispositif du réseau, ces éléments de configuration étant destinés à être appliqués et/ou à être utilisés par ledit deuxième dispositif pour permettre l'activation du protocole de routage dynamique. Plus spécifiquement, chaque deuxième dispositif recevant un message de commande du premier dispositif applique la commande incluse dans le message, c'est-à-dire, extrait du message de commande les éléments de configuration le concernant, se configure avec ceux-ci, puis transmet à son tour, le cas échéant, dans un message de commande des éléments de configuration à un ou plusieurs autres dispositifs du réseau conformément aux consignes de propagation incluses dans le message de commande qu'il a reçu, etc.

On note que conformément à l'invention, les éléments de configuration compris dans le message de commande peuvent être de différentes natures. Ils peuvent comprendre notamment des paramètres d'établissement de sessions selon le protocole de routage (tels que par exemple un numéro d'AS, ou une ou plusieurs valeurs de temporisateurs à appliquer lors des sessions selon le protocole de routage dynamique), mais également des instructions de gestion des sessions selon le protocole de routage dynamique (comme par exemple des consignes d'établissement de sessions avec tout ou partie des dispositifs du réseau ou d'allocation de numéros d'AS), ainsi que des consignes de propagation des éléments de configuration dans le réseau. Plus généralement, ces éléments peuvent comprendre tout type d'informations permettant de configurer les dispositifs du réseau pour activer le protocole de routage dynamique dans le réseau, c'est-à-dire pour rendre son utilisation dans le réseau opérationnelle et notamment permettre l'établissement de sessions ou d'adjacences (au sens du protocole OSPF) selon ce protocole entre les dispositifs du réseau.

Il se peut par ailleurs qu'un même élément de configuration porte plusieurs types d'informations de configuration, comme par exemple un paramètre d'établissement de sessions et implicitement une instruction de gestion de sessions selon le protocole de routage dynamique (par exemple établir une session selon le protocole de routage dynamique avec tous les voisins directs) et une information implicite de propagation des éléments de configuration dans le réseau induite par cette instruction de gestion (par exemple, propager les éléments de configuration vers tous les voisins avec lesquels une session est établie), etc.

Ainsi, conformément à l'invention, les dispositifs du réseau propagent de proche en proche les éléments de configuration requis (paramètres d'établissement de session selon le protocole de routage et le cas échéant, instructions de gestion des sessions selon ce protocole et consignes de propagation des éléments de configuration) pour l'activation du protocole de routage dynamique. La façon dont la propagation doit être orchestrée au sein du réseau en fonction de la politique de routage choisie est avantageusement transmise dans les messages échangés entre les différents dispositifs.

Grâce à l'invention, on atteint un niveau élevé d'automatisation de la procédure de configuration des dispositifs de réseau pour l'activation du protocole de routage dynamique dans le réseau. Ce niveau d'automatisation répond de manière privilégiée, mais non limitative, aux exigences des centres de données de taille importante tels que les centres de données MSDC ou HSDC, et permet une simplification des opérations au sein des infrastructures réseau sous-jacentes. Cette automatisation permet également de minimiser les risques d'erreur auxquels sont typiquement exposées des procédures de configuration exécutées par un administrateur du réseau.

L'invention permet en outre de limiter les interactions entre les divers dispositifs du réseau pour l'activation du protocole de routage, et, par conséquent, de réduire la volumétrie du trafic de signalisation en découlant. En effet, grâce à la propagation de proche en proche des éléments de configuration, l'opérateur du réseau peut éventuellement se contenter de configurer explicitement un unique équipement du réseau, celui-ci transmettant ensuite les paramètres requis pour l'établissement de sessions selon le protocole de routage à ses voisins, ainsi que la politique de routage souhaitée par l'opérateur du réseau. Ces voisins relaient ensuite l'information vers leurs propres voisins, etc. La procédure de configuration des dispositifs de réseau est ainsi grandement simplifiée, et cohérente entre tous les dispositifs du réseau. Elle permet de limiter les risques d'erreurs liés à une configuration manuelle de tous les dispositifs. Elle permet en outre de réduire les coûts d'exploitation liés à la configuration du réseau.

Par ailleurs, la configuration automatique proposée par l'invention offre une grande flexibilité en matière de politiques de routage. Elle peut s'adapter à différents types de réseau, à différentes topologies de ces réseaux (par ex. organisation en clusters, niveaux hiérarchiques) et à différentes configurations de ces réseaux (par ex. utilisation de numéros d'AS privés, ou allocation d'AS distincts à des niveaux hiérarchiques ou à des clusters distincts).

Dans un mode particulier de réalisation, l'étape d'exécution comprend en outre une étape d'établissement d'au moins une session selon ledit protocole de routage avec ledit au moins un deuxième dispositif.

De la sorte, à l'issue de la configuration des différents dispositifs du réseau, l'ensemble des sessions selon le protocole de routage correspondant à la politique de routage souhaitée est établi automatiquement, et le protocole de routage est activé et peut être utilisé pour l'acheminement du trafic au sein du réseau.

Dans un mode particulier de réalisation, ledit au moins un deuxième message est un message d'établissement d'une session selon ledit protocole de routage.

De la sorte, une session entre le premier dispositif et le deuxième dispositif est établie en même temps que la transmission des éléments de configuration au deuxième dispositif. Dans le cas du protocole BGP, le deuxième message est par exemple un message BGP OPEN, modifié de sorte à inclure les éléments de configuration nécessaires à l'activation du protocole de routage BGP. Autrement dit, le message BGP OPEN ainsi modifié n'est plus seulement un message de déclaration des paramètres de configuration du dispositif qui l'envoie, mais devient un message véhiculant une commande pour appliquer les éléments de configuration qu'il contient, et qui est destinée à être exécutée par le dispositif auquel il est adressé.

Ce mode de réalisation propose avantageusement d'exploiter un format de message classique, qui est décrit dans la spécification du protocole de routage BGP (RFC 4271). On peut ainsi minimiser le nombre de messages échangés entre les deux dispositifs.

On note qu'aucune limitation n'est attachée à la façon dont ledit message d'établissement de session est modifié pour être interprété comme un message de commande. Cela peut se faire, par exemple, via l'ajout d'une option dans le message ou d'un nouveau champ comprenant les éléments de configuration à utiliser.

Par ailleurs, d'autres types de message peuvent être utilisés pour véhiculer et propager les éléments de configuration au sein du réseau. Par exemple, un message d'annonce de type RA (Router Advertisement) peut également être adapté pour véhiculer les commandes portant sur la configuration à appliquer pour activer le protocole de routage au sein du réseau. Un message de sollicitation de type RS (Router Solicitation) peut aussi être adapté et utilisé à cet effet. Les messages RA et RS selon l'art antérieur ont été décrits dans la spécification du protocole « Neighbor Discovery for Internet Protocol version 6 » (RFC 4861).

Dans un mode particulier de réalisation, ladite au moins une instruction de gestion des sessions comprend au moins une consigne parmi :
- une consigne d'établir une session selon ledit protocole de routage avec tous les dispositifs du réseau en relation directe ;
- une consigne d'établir une session selon ledit protocole de routage avec tous les dispositifs du réseau en relation directe via une interface prédéterminée ;
- une consigne destinée à être appliquée par au moins un dispositif du réseau d'établir une session selon ledit protocole de routage avec tous les dispositifs du réseau en relation directe et qui appartiennent à un même niveau hiérarchique dans le réseau ; et
- une consigne d'établir une session selon ledit protocole de routage avec au moins un dispositif dont un identifiant de routage est inclus dans ladite consigne.

Par « relation directe », on entend tous les dispositifs connectés au dispositif considéré.

Ledit identifiant de routage peut être par exemple une adresse IP ou un nom de domaine.

Par exemple, ladite interface prédéterminée est une interface identifiée par un indice pair, une interface identifiée par un indice impair, ou toutes les interfaces identifiées par un indice multiple d'un entier prédéterminé (par exemple, la communication d'un entier 2 est une indication d'appliquer la configuration aux interfaces identifiées par un indice multiple de 2 : Interface[2], Interface[4], ...).

Dans un mode particulier de réalisation, si aucune consigne n'est indiquée dans les éléments de configuration quant à la gestion des sessions à proprement parler, le dispositif destinataire procède par défaut à l'établissement de sessions selon ledit protocole de routage avec chacun des dispositifs du réseau qui lui sont directement connectés.

Ce mode de réalisation permet de réduire les consignes devant être transmises dans les éléments de configuration, et donc la signalisation associée. En outre, il n'est plus nécessaire d'activer explicitement auprès de chaque dispositif du réseau, via une configuration préalable, l'établissement de sessions selon le protocole de routage dynamique avec ses voisins. Ceci peut être fait dynamiquement et automatiquement grâce aux consignes véhiculées de proche en proche par l'invention.

Les différentes consignes précitées permettent de tenir compte de la taille et de la topologie du réseau (par exemple de son organisation en niveaux hiérarchiques, le cas échéant) dans la définition et la mise en place de la politique de routage. Par ailleurs, elles permettent de détailler avec le niveau de précision adéquat la politique de routage envisagée en sélectionnant les dispositifs qui doivent établir entre eux des sessions selon le protocole de routage.

Ainsi par exemple, l'établissement automatisé de sessions BGP avec chacun des dispositifs du réseau en relation directe avec le dispositif à l'origine de la demande d'établissement de session est particulièrement adapté aux réseaux de petite dimension ayant un faible nombre de niveaux hiérarchiques.

De même, les consignes limitant l'établissement de sessions avec des dispositifs via une interface prédéterminée ou appartenant à un niveau hiérarchique particulier peuvent être appliquées dans le cadre de réseaux de dimension plus importante et ainsi faciliter l'organisation et la mise en place dynamique de clusters au sein de ces réseaux.

Bien entendu, ces exemples de consignes ne sont donnés qu'à titre illustratif. D'autres consignes peuvent être envisagées, définies par exemple à partir d'expressions régulières permettant de créer des filtres sur la base de divers paramètres tels que les interfaces supportées par les dispositifs ou les niveaux hiérarchiques auxquels les dispositifs appartiennent dans le réseau, etc.

De même, les instructions de gestion ne se limitent pas à des consignes d'établissement de sessions avec d'autres dispositifs, et peuvent inclure d'autres types de consignes, comme notamment des consignes de sélection de paramètres pour l'établissement des sessions, telles que par exemple une consigne d'allocation d'un numéro d'AS.

Dans un mode particulier de réalisation, le premier message peut comprendre, parmi les éléments de configuration, un numéro d'AS à utiliser par le premier dispositif et éventuellement au moins une plage de valeurs prédéfinie pour la sélection de numéros d'AS pouvant être utilisés par des dispositifs du réseau. Ladite plage de valeurs peut être contiguë ou non-contiguë.

Ce mode de réalisation offre la possibilité d'allouer dynamiquement et d'une manière distribuée des numéros d'AS aux dispositifs du réseau.

A titre d'exemple, ladite au moins une instruction de gestion peut comprendre une consigne de sélection d'un numéro d'AS selon une stratégie prédéterminée. Aucune limitation n'est attachée à la stratégie indiquée dans la consigne : il peut s'agir par exemple de sélectionner un numéro d'AS dans une plage de valeurs prédéfinie de façon aléatoire, ou de façon incrémentale.

Notamment, lorsque les éléments de configuration comprennent au moins une plage de valeurs prédéfinie pour la sélection de numéros d'AS, le procédé de configuration peut comprendre en outre une étape d'allocation par le premier dispositif audit au moins un deuxième dispositif d'au moins un numéro d'AS sélectionné dans ladite au moins une plage de valeurs ainsi qu'une plage de valeurs à allouer à des voisins.

L'invention permet, dans ces modes de réalisation dans lesquels un numéro d'AS, ou une ou plusieurs plages de valeurs de numéros d'AS pour sélectionner de tels numéros, sont présents parmi les éléments de configuration, de fournir aux dispositifs du réseau les numéros d'AS dont ils ont besoin pour établir des sessions BGP. La fourniture de plusieurs plages de valeurs permet de différencier les numéros d'AS attribués, en fonction, par exemple, des niveaux hiérarchiques.

Ainsi, il n'est pas nécessaire de configurer au préalable chaque dispositif du réseau avec au moins un numéro d'AS qui lui est associé ainsi qu'avec les numéros d'AS associés à ses voisins éventuels, mais cette configuration peut être réalisée dynamiquement et automatiquement grâce à l'invention, et de façon distribuée sur l'ensemble des dispositifs du réseau.

Il convient de noter que l'invention n'impose aucune contrainte concernant l'attribution des numéros d'AS au sein du réseau : elle s'applique quel que soit le format de ces numéros

(typiquement codés sur 16 ou 32 bits), et aussi bien lorsqu'un même numéro d'AS est utilisé par tous les dispositifs du réseau que lorsque des numéros d'AS distincts sont attribués à des niveaux hiérarchiques différents, voire à des clusters différents au sein d'un même niveau hiérarchique.

Outre les numéros d'AS ou plages de valeurs dans lesquels sélectionner ces numéros, les éléments de configuration inclus dans le premier message peuvent comprendre d'autres types de paramètres susceptibles d'être impliqués dans la gestion des sessions selon le protocole de routage.

Ainsi, dans un mode particulier de réalisation, les éléments de configuration compris dans le premier message comprennent en outre au moins un élément parmi :
- une taille de cluster pour au moins un niveau hiérarchique du réseau ;
- un type de routes à annoncer par l'intermédiaire du protocole de routage ;
- une liste de réflecteurs de route utilisés le cas échéant dans le réseau ;
- un identifiant de confédération BGP de systèmes autonomes ; et
- au moins une valeur de temporisateur à appliquer lors de sessions selon ledit protocole de routage.

Bien entendu, ces paramètres ne sont donnés qu'à titre illustratif et sont optionnels ; d'autres paramètres peuvent être considérés et véhiculés dans le premier message et, le cas échéant, dans le deuxième message propagé conformément à l'invention.

Dans un mode particulier de réalisation, le procédé de configuration comprend une étape de détection qu'un dit deuxième dispositif est déjà configuré pour l'activation du protocole de routage, ladite étape de détection conduisant à une annulation de l'étape d'envoi du deuxième message à ce deuxième dispositif.

Ce mode de réalisation permet de tenir compte des configurations déjà réalisées dans le réseau.

Dans un autre mode particulier de réalisation, le procédé de configuration comprend une étape de détection qu'un dit deuxième dispositif est déjà configuré pour l'activation du protocole de routage, ladite étape de détection conduisant à maintenir l'étape d'envoi du deuxième message à ce deuxième dispositif, le deuxième message ne contenant toutefois que des informations susceptibles d'être utilisées par les voisins du deuxième dispositif.

Par exemple, le deuxième message peut ne contenir qu'une liste de numéros d'AS destinée à être allouée à des voisins du deuxième dispositif. Ce mode de réalisation permet de tenir compte de la configuration locale d'un dispositif, mais de relayer des informations de configuration qui sont susceptibles d'être utilisées par les voisins du deuxième dispositif.

Comme mentionné précédemment, l'invention a une application privilégiée lorsque le protocole de routage mis en oeuvre dans le réseau est le protocole BGP. Toutefois, elle s'applique également à d'autres protocoles de routage, comme par exemple IS-IS ou OSPF.

Dans un mode particulier de réalisation, les différentes étapes du procédé de configuration sont déterminées par des instructions de programmes d'ordinateurs.

En conséquence, l'invention vise aussi un programme d'ordinateur sur un support d'informations, ce programme étant susceptible d'être mis en oeuvre dans un dispositif d'un réseau tel un routeur ou un commutateur, ou plus généralement dans un ordinateur, ce programme comportant des instructions adaptées à la mise en oeuvre des étapes d'un procédé de configuration tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

L'invention vise également un système de communication d'un réseau utilisant un protocole de routage dynamique, ce système comprenant une pluralité de dispositifs selon l'invention aptes à propager de proche en proche des éléments de configuration liés à l'activation du protocole de routage dans le réseau.

Le système bénéficie des mêmes avantages cités précédemment que le dispositif et le procédé de configuration selon l'invention. Notamment, il permet l'activation automatique du protocole de routage dynamique entre les dispositifs du réseau.

Dans un mode particulier de réalisation, le système de communication comprend en outre un contrôleur comprenant :
- un module de génération, configuré pour générer un message de commande comprenant des éléments de configuration pour l'activation du protocole de routage dynamique dans le réseau ; et
- un module d'envoi, configuré pour envoyer ledit message de commande à destination d'au moins un dispositif du réseau conforme à l'invention.

Ce mode de réalisation particulier a une application privilégiée mais non limitative dans un contexte où le réseau repose, par exemple, sur une architecture SDN et comprend au moins un contrôleur réseau disposant de la logique de calcul nécessaire pour l'allocation de ressources dans le réseau et la mise en place dynamique de différentes politiques au sein du réseau, comme par exemple une politique de routage pour l'acheminement et le routage du trafic, une politique de qualité de service, d'ingénierie du trafic, etc. Dans un tel contexte, on peut envisager que ce contrôleur, qui a une vision globale et systémique du réseau, et en particulier une connaissance de sa topologie, soit configuré pour déterminer, en fonction de la politique de routage définie, les éléments de configuration des différents dispositifs du réseau nécessaires à l'activation du protocole de routage dans le réseau, et envoyer un premier message de commande contenant tous ces éléments de configuration à un ou plusieurs dispositifs du réseau pour que celui-ci ou ceux-ci propagent ces éléments de configuration vers les autres dispositifs du réseau.

Dans un mode de réalisation privilégié, afin de limiter la signalisation au sein du réseau, le contrôleur adresse le message de commande avec les éléments de configuration pour l'activation du protocole de routage à un unique dispositif du réseau.

En variante, le réseau peut ne pas disposer d'entité centralisée (par ex. un contrôleur). Dans ce cas, le premier message de commande contenant les éléments de configuration caractéristiques de la politique de routage dynamique qui doit être mise en place par l'ensemble des dispositifs du réseau peut être transmis « manuellement » par un opérateur du réseau (par ex. via un script approprié) à l'un quelconque des dispositifs du réseau qui se charge ensuite de propager les éléments de configuration vers les autres dispositifs du réseau conformément à l'invention.

Dans un mode particulier de réalisation, le système de communication comprend en outre au moins un dispositif supplémentaire configuré pour refuser d'appliquer le deuxième message de commande reçu d'un dit premier dispositif du réseau. Un tel dispositif supplémentaire est par exemple un dispositif non-compatible avec le procédé de configuration selon l'invention ou qui est configuré pour ne pas accepter la configuration qui lui est proposée par le message de commande qu'il a reçu.

L'invention permet ainsi de tenir compte des spécificités de certains dispositifs qui ont des fonctions particulières dans le réseau, comme par exemple des dispositifs du réseau qui sont responsables de l'échange de routes avec le monde extérieur au réseau (par ex. Internet). Aussi, l'invention permet d'instruire un dispositif à accepter ou à refuser les propositions de configuration automatique en positionnant au sein de chaque dispositif du réseau concerné un paramètre à une valeur « VRAIE » ou « TRUE » par exemple, si le dispositif est compatible avec l'invention, et à une valeur « FAUSSE » ou « FALSE » sinon. La valeur de ce paramètre peut être modifiée par un opérateur si besoin.

On peut également envisager, dans d'autres modes de réalisation, que le procédé de configuration, le dispositif ainsi que le système de communication selon l'invention, présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un système de communication conforme à l'invention dans un mode particulier de réalisation ;
- la figure 2 représente un contrôleur appartenant au système de communication de la figure 1 ;
- les figures 3A et 3B représentent respectivement l'architecture matérielle et l'architecture fonctionnelle d'un dispositif de réseau conforme à l'invention et appartenant au système de communication de la figure 1 ;
- la figure 4 représente les principales étapes d'un procédé de configuration selon l'invention tel qu'il est mis en oeuvre par un dispositif de réseau illustré sur les figures 3A et 3B ;
- la figure 5A représente un message BGP OPEN tel que décrit dans le document RFC 4271 ;
- la figure 5B représente un message BGP OPEN modifié pour la mise en oeuvre de l'invention ;
- la figure 5C illustre un champ du message BGP OPEN modifié de la figure 5B ;
- la figure 6 représente le format d'un message RA modifié pour la mise en oeuvre de l'invention ;
- la figure 7 illustre un exemple d'application de l'invention pour la découverte automatique d'un numéro d'AS et l'établissement automatique d'une session BGP entre deux dispositifs d'un réseau ; et
- la figure 8 représente un exemple d'application de l'invention suite à l'ajout de dispositifs dans un réseau.

### Description détaillée de l'invention

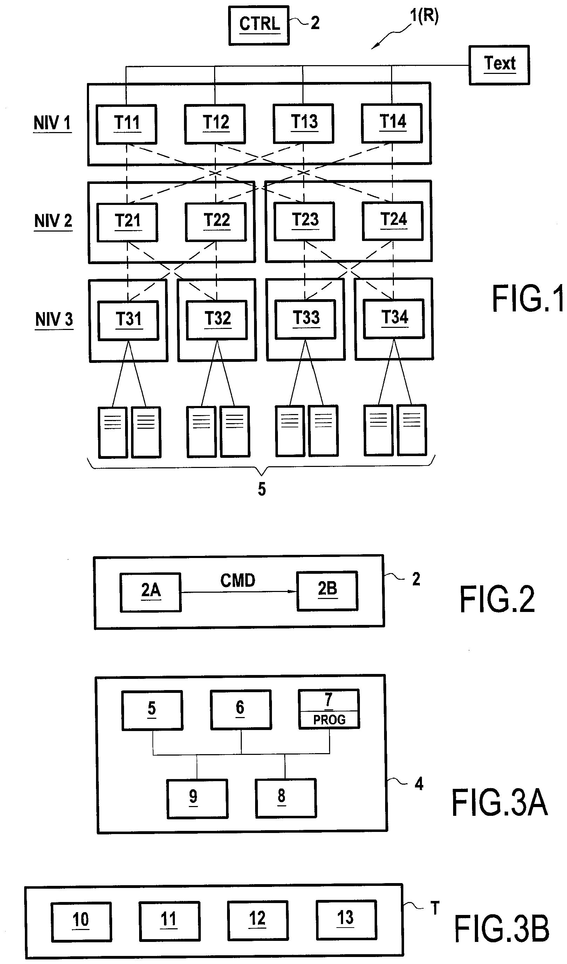

La **figure 1** représente, dans son environnement, un système de communication 1 conforme à l'invention, dans un mode particulier de réalisation.

Dans l'exemple envisagé à la figure 1, le système de communication 1 comprend une pluralité de dispositifs de réseau (globalement référencés par T), tous conformes ici à l'invention et appartenant à l'infrastructure réseau d'un centre de données (DC). Les dispositifs T sont reliés entre eux via une ou plusieurs interfaces de communication (illustrée(s) sur la figure en traits discontinus) et forment un réseau de communication R.

Aucune limitation n'est attachée à la nature des dispositifs de réseau T (aussi appelés noeuds du réseau R) : il s'agit d'éléments de réseau quelconques, comme par exemple des routeurs, des commutateurs, etc. Aucune limitation n'est attachée non plus à la nature des interfaces de communication utilisées par les dispositifs T pour communiquer entre eux au sein du réseau R. Il peut s'agir d'interfaces de communication filaires ou sans fil, mobiles ou fixes, etc.

Le réseau de communication R formé par les dispositifs T utilise un protocole de routage dynamique. L'invention permet une configuration automatique et distribuée des différents dispositifs de réseau T en vue d'activer ce protocole de routage dynamique dans le réseau R.

Dans le mode de réalisation décrit ici, le protocole de routage dynamique considéré est le protocole BGP. L'invention peut s'appliquer à d'autres protocoles de routage dynamique, tels que par exemple à d'autres protocoles de routage utilisant des numéros d'AS ou une notion similaire (par exemple, des identifiants ITAD (IP Telephony Administrative Domain) utilisés par le protocole TRIP (décrit notamment dans le document RFC 3219), ou encore des numéros d'aires (paramètre « Area ID ») utilisés par des routeurs OSPF (décrit notamment dans le document RFC 2328)). Par exemple, la valeur du paramètre « Area ID » peut être allouée d'une manière automatique par un routeur OSPF suite à une première instruction configurée localement ou communiquée par un contrôleur.

L'infrastructure réseau sur laquelle s'appuie le centre de données implémente ici une architecture SDN. Cependant, l'utilisation de SDN n'est pas un prérequis pour cette invention.

Cette infrastructure comprend, outre les dispositifs de réseau T, un contrôleur 2 permettant une exploitation cohérente et déterministe du réseau R du centre de données. Le contrôleur 2 a, de façon connue, une vision globale et systémique du réseau R, de sa topologie, de ses composantes, des fonctions réseau (virtualisées ou non) disponibles, de leur statut, etc. Ce contrôleur 2 est capable de définir une politique de routage au sein du réseau R, s'appuyant sur le protocole BGP, et permettant d'acheminer le trafic du centre de données de façon conforme aux objectifs fixés par l'opérateur du centre de données. Il est, dans l'exemple illustré à la figure 1, relié à l'un des dispositifs de réseau T, à savoir au dispositif T11.

Pour faire appliquer cette politique de routage au sein du réseau et du système de communications 1, le contrôleur 2 dispose, comme illustré sur la figure 2 :
- d'un module de génération 2A, configuré pour générer un message de commande CMD comprenant des éléments de configuration pour l'activation du protocole de routage dynamique BGP dans le réseau et reflétant la politique de routage souhaitée par l'opérateur du centre de données. Les éléments de configuration compris dans le message de commande CMD seront détaillés ultérieurement. Ils peuvent avoir été définis en tout ou partie par l'opérateur du centre de données de sorte à refléter la politique de routage qu'il souhaite voir appliquer au sein du réseau R, et avoir été transmis par l'opérateur au contrôleur 2 et à son module de génération 2A en utilisant des moyens connus en soi, comme par exemple en se connectant directement sur le contrôleur 2 au moyen d'une session Telnet ou via un script ; et
- d'un module d'envoi 2B, configuré pour envoyer le message de commande ainsi élaboré à destination d'au moins un dispositif sélectionné par le contrôleur 2 parmi les dispositifs T. Dans l'exemple décrit à la figure 1, on suppose que le contrôleur 2 envoie le message de commande élaboré à un unique dispositif. La façon dont le contrôleur 2 sélectionne cet unique dispositif (ou les dispositifs vers lesquels il envoie le message de commande si plusieurs dispositifs sont sélectionnés) dépend de choix d'ingénierie, de la topologie du réseau, etc.

Dans l'exemple illustré à la figure 1, le système de communication 1 est organisé en une pluralité de niveaux hiérarchiques (trois sur la figure 1 référencés par NIV1, NIV2 et NIV3), chaque niveau hiérarchique étant lui-même organisé en un ou plusieurs clusters (c'est-à-dire groupes) de dispositifs : un cluster pour le niveau hiérarchique NIV1 comprenant quatre dispositifs T11, T12, T13 et T14, deux clusters pour le niveau hiérarchique NIV2 comprenant respectivement deux dispositifs T21 et T22, et deux dispositifs T23 et T24, le niveau hiérarchique NIV3 comprenant quatre dispositifs T31, T32, T33 et T34 appartenant chacun à un cluster distinct. Les dispositifs de réseau du dernier niveau hiérarchique NIV3 sont reliés ici aux différentes machines virtuelles ou matérielles (par exemple des serveurs) du centre de données (globalement référencées par S).

Bien entendu, cette architecture d'infrastructure réseau et son organisation en niveaux hiérarchiques et en clusters n'est donnée qu'à titre illustratif, et l'invention s'applique à d'autres types d'architectures (ayant une unité centrale telle que le contrôleur 2 ou non). Le choix de l'architecture du réseau R relève de l'ingénierie du réseau, de sa topologie, de la taille du centre de données, etc.

Comme mentionné précédemment, l'utilisation du protocole de routage dynamique BGP au sein du réseau R formé par les dispositifs T requiert l'allocation de numéros d'AS à chacun de ces dispositifs. Dans l'exemple envisagé à la figure 1, les choix suivants sont faits par l'opérateur du centre de données pour cette allocation :
- utilisation de numéros d'AS privés (appartenant à la plage 64512-65524 ou à la plage 4200000000-4294967294 pour le cas de numéros d'AS codés sur 4 octets) ; et
- utilisation d'un même numéro d'AS pour les dispositifs de réseau situés à un même niveau hiérarchique et appartenant à un même cluster.

Cette politique d'allocation des numéros d'AS n'est donnée qu'à titre illustratif. D'autres politiques peuvent être retenues par l'opérateur du centre de données (par exemple, même numéro d'AS pour l'ensemble des dispositifs appartenant à un même niveau hiérarchique, même numéro d'AS pour l'ensemble des dispositifs du réseau, etc.).

Comme indiqué ci-avant, les dispositifs T du réseau R sont ici tous conformes à l'invention. En d'autres termes, ils sont équipés de moyens leur permettant de propager de proche en proche les éléments de configuration du réseau liés à l'activation du protocole de routage dans le réseau R, et comprenant les paramètres et les politiques de routage devant être appliqués lors de l'établissement des sessions BGP et aussi longtemps que les sessions BGP seront maintenues.

Dans le mode de réalisation décrit ici, les dispositifs T du réseau R conformes à l'invention ont l'architecture matérielle d'un ordinateur 4 telle qu'illustrée à la **figure 3A****.** Ils comprennent notamment un processeur 5, une mémoire vive 6, une mémoire morte 7, une mémoire flash non volatile 8, ainsi que des moyens de communication 9 comprenant une ou plusieurs interfaces de communication, chacune identifiée par un indice (c'est-à-dire un nombre entier).

Les moyens de communication 9 permettent à chaque dispositif T d'être relié à un ou plusieurs autres dispositifs T du réseau R, et de communiquer avec ces autres dispositifs notamment pour le routage et l'acheminement du trafic au sein du réseau, en utilisant le protocole BGP. A cet effet, les dispositifs T sont configurés ici pour écouter par défaut sur le port TCP 179, en vue de recevoir les messages relatifs au protocole BGP et en particulier les messages OPEN de demande d'établissement de sessions BGP. Afin de différencier la procédure proposée par l'invention de celle définie par la norme actuelle, d'autres numéros de port peuvent être utilisés si et seulement si tous les dispositifs ont été instruits convenablement au préalable.

La mémoire morte 7 de chaque dispositif de réseau T constitue un support d'enregistrement conforme à l'invention, lisible par le processeur 5 et sur lequel est enregistré un programme d'ordinateur PROG conforme à l'invention.

Le programme d'ordinateur PROG définit des modules fonctionnels (et logiciels ici) du dispositif de réseau T, configurés pour mettre en oeuvre les étapes du procédé de configuration selon l'invention. Les modules fonctionnels définis par le programme PROG s'appuient sur et/ou commandent les éléments matériels 5-9 de l'ordinateur 4 cités précédemment. Ils comprennent notamment ici, comme illustré sur la **figure 3B** :
- un module de réception 10 apte à recevoir un premier message de commande comprenant des éléments de configuration liée à l'activation du protocole de routage dynamique (BGP ici) dans le réseau R ;
- un module de configuration 11 adapté à configurer des paramètres d'établissement de sessions selon le protocole de routage BGP, utilisés par le dispositif de réseau T à partir d'éléments de configuration compris dans le premier message ; et
- un module d'exécution 12, activé si les éléments de configuration compris dans le premier message comprennent au moins une instruction de gestion de sessions selon le protocole de routage BGP dans le réseau, pour exécuter cette instruction de gestion de sessions ; et
- un module de propagation 13, activé si les éléments de configuration compris dans le premier message comprennent une consigne de propagation des éléments de configuration dans le réseau, et configuré pour envoyer au moins un deuxième message de commande vers au moins un deuxième dispositif du réseau R conformément à ladite consigne de propagation. Le deuxième message de commande envoyé par le module de propagation 13 comprend tout ou partie des éléments de configuration compris dans le premier message, ceux-ci étant destinés à être appliqués par le deuxième dispositif pour activer le protocole de routage dynamique dans le réseau R.

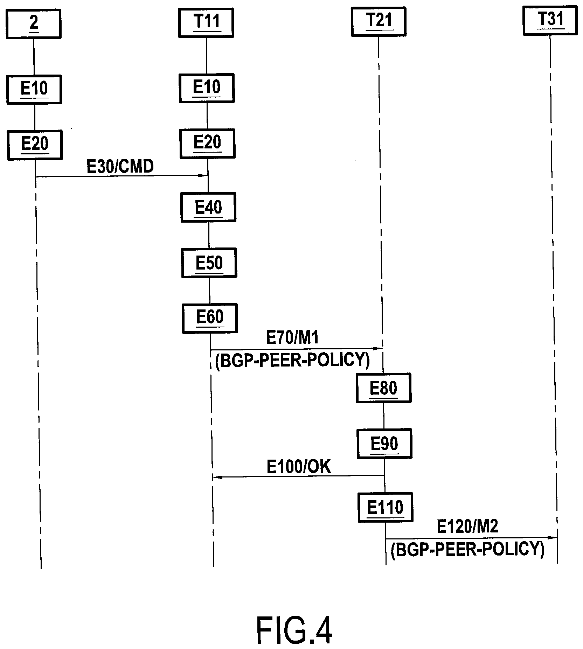

Nous allons maintenant décrire, en référence à la **figure 4****,** les principales étapes mises en oeuvre conformément à l'invention pour la configuration des dispositifs de réseau T afin d'activer au sein du réseau R le protocole de routage dynamique BGP. A titre illustratif, on envisage sur la figure 4 les étapes mises en oeuvre par seulement trois éléments du réseau R, à savoir, par le contrôleur 2, par le dispositif de réseau T11, et par le dispositif de réseau T21 illustrés sur la figure 1. Les étapes mises en oeuvre par les dispositifs de réseau T11 et T21 correspondent aux étapes du procédé de configuration selon l'invention.

On suppose ici en préliminaire que le contrôleur 2 a reçu, de l'opérateur du centre de données, différents éléments de configuration définissant la politique de routage qu'il souhaite appliquer au sein du réseau R (étape E10). Ceci peut être réalisé via une configuration explicite du contrôleur 2 par l'opérateur du centre de données, par exemple en se connectant sur celui-ci via une session Telnet, ou en utilisant un protocole tel que NETCONF. Ces éléments de configuration incluent notamment des valeurs de paramètres destinées à être utilisées par les dispositifs T lors de l'établissement de sessions BGP (par exemple des numéros d'AS, des valeurs de temporisateurs (timers, en anglais)), diverses instructions de gestion des sessions BGP au sein du réseau R comme par exemple des consignes relatives à l'établissement des sessions BGP, à l'allocation de numéros d'AS, ainsi que des consignes de propagation des éléments de configuration entre les différents dispositifs T du réseau, etc. Ces éléments seront décrits plus en détail ultérieurement.

Suite à sa configuration par l'opérateur du centre de données, le contrôleur 2, par l'intermédiaire de son module de génération 2A, forme puis génère un message de commande CMD comprenant les éléments de configuration permettant l'activation du protocole de routage BGP dans le réseau R (étape E20). Dans le mode de réalisation décrit ici, ce message de commande CMD est par exemple un message BGP_PEER_POLICY. Il convient de noter qu'un tel message est aujourd'hui inexistant dans le protocole BGP et requiert donc d'être défini pour la mise en oeuvre de l'invention. Par message de commande, on entend un message véhiculant des instructions destinées à être appliquées (exécutées) par le destinataire du message, par opposition à un message de déclaration qui, lorsqu'il est envoyé par un dispositif du réseau, a pour vocation d'informer les autres dispositifs du réseau des paramètres qu'il utilise.

Le message de commande CMD comprend, dans le mode de réalisation décrit ici, un certain nombre de champs à savoir :
- un champ ID comprenant une instruction (consigne) relative à la gestion des sessions BGP dans le réseau R (instruction de gestion de sessions BGP au sens de l'invention) et à la propagation des éléments de configuration permettant l'activation du protocole BGP. Plus précisément ici, cette instruction comprend une consigne relative à l'établissement des sessions BGP dans le réseau R et à la propagation des éléments de configuration. Le champ ID peut prendre une pluralité de valeurs reflétant des consignes différentes.

A titre d'exemple :
∘ la valeur 0 reflète une consigne requérant l'établissement par le dispositif de réseau recevant cette consigne, d'une session BGP avec tous les dispositifs du réseau se trouvant en relation directe avec lui, et la propagation des éléments de configuration vers ces dispositifs ;
∘ la valeur 1 reflète une consigne requérant l'établissement, par le dispositif de réseau recevant cette consigne, d'une session BGP avec tous les dispositifs du réseau en relation directe avec lui via une interface d'indice impair, et la propagation des éléments de configuration vers ces dispositifs ;
∘ la valeur 2 reflète une consigne requérant l'établissement, par le dispositif de réseau recevant cette consigne, d'une session BGP avec tous les dispositifs du réseau en relation directe avec lui via une interface d'indice pair, et la propagation des éléments de configuration vers ces dispositifs ;
∘ la valeur 3 reflète une consigne requérant l'établissement, par le dispositif de réseau recevant cette consigne, d'une session BGP avec tous les dispositifs du réseau en relation directe avec lui via une interface d'indice multiple d'un entier n (n étant défini par la consigne et désignant un entier supérieur à 1), et la propagation des éléments de configuration vers ces dispositifs ;
∘ la valeur 4 reflète une consigne requérant l'établissement, par le dispositif de réseau recevant cette consigne, d'une session BGP avec tous les dispositifs du réseau en relation directe avec lui et appartenant au même niveau hiérarchique, et la propagation des éléments de configuration vers ces dispositifs ; et
∘ la valeur 5 reflète une consigne requérant l'établissement, par le dispositif de réseau recevant cette consigne, d'une session BGP avec tous les dispositifs renseignés explicitement dans ladite consigne (sur la base de leurs identifiants de routage), et la propagation des éléments de configuration vers ces dispositifs.

Ces exemples de consignes et les valeurs qui y sont associées ne sont donnés qu'à titre illustratif. D'autres valeurs et d'autres consignes peuvent être définies pour le champ ID ; des expressions régulières peuvent être utilisées pour définir des filtres, appliquées par exemple sur les interfaces du dispositif de réseau ou sur les niveaux hiérarchiques et expliciter comment la propagation des éléments de configuration doit être réalisée dans le réseau R entre les dispositifs T. En outre, les instructions de gestion de sessions BGP qui sont décrites dans le champ ID peuvent comprendre d'autres types de consignes comme par exemple des consignes de sélection d'un numéro d'AS selon une stratégie prédéterminée (par exemple de façon aléatoire ou de façon incrémentale dans une plage de valeurs prédéterminée, etc.). Tout type de consigne visant à permettre l'application par les dispositifs de réseau T de la politique de routage souhaitée par l'opérateur du centre de données peut être défini et valorisé dans le champ ID ;
- un champ AS_NUMBER, indiquant la valeur de numéro d'AS que le dispositif de réseau recevant le message CMD doit utiliser lors de l'établissement de ses sessions BGP. Si ce champ contient plusieurs valeurs, alors le dispositif choisit au moins une valeur pour son propre usage, le reste étant utilisé éventuellement pour allouer des numéros d'AS à des voisins ;
- un champ SUPPLIED_ASN_RANGE contenant une ou plusieurs plages de valeurs permettant l'allocation dynamique de numéros d'AS aux voisins du dispositif de réseau recevant le message CMD. Cette allocation dynamique peut être réalisée selon une stratégie prédéterminée (par exemple incrémentale, aléatoire ou autre) par le dispositif de réseau recevant le message CMD lui-même ou directement par les voisins auxquels il transmet la valeur du champ. On note que des variantes du champ SUPPLIED_ASN_RANGE peuvent être envisagées comme par exemple :
   ∘ SUPPLIED ASN_RANGE ALL : qui précise une plage de valeurs pouvant être utilisée par tous les niveaux hiérarchiques ;
   ∘ SUPPLIED_ASN_RANGE_LL : qui précise une plage de valeurs pouvant être utilisée pour l'allocation de numéros d'AS à des dispositifs voisins appartenant à un niveau inférieur ;
   ∘ SUPPLIED_ASN_RANGE_UL: qui précise une plage de valeurs pouvant être utilisée pour l'allocation de numéros d'AS à des dispositifs voisins appartenant à un niveau supérieur ;
- un champ CLUSTER_SIZE, indiquant la taille de cluster considérée pour chaque niveau hiérarchique (par exemple, deux noeuds pour le niveau hiérarchique NIV2). Plusieurs variantes de ce champ peuvent être envisagées comme par exemple :
   ∘ CLUSTER_SIZE_ALL : qui précise la taille recommandée pour former automatiquement les clusters de tous les niveaux hiérarchiques ;
   ∘ CLUSTER_SIZE_LL : qui précise la taille recommandée pour former automatiquement les clusters d'un niveau hiérarchique inférieur ;
   ∘ CLUSTER_SIZE_UL : qui précise la taille recommandée pour former automatiquement les clusters d'un niveau hiérarchique supérieur ;
- un champ ROUTE_TYPES, précisant le ou les types de routes à annoncer, comme par exemple, les routes IPv4, les routes IPv6, les routes VPN (Virtual Private Network), les routes unicast, les routes multicast, etc. ;
- un champ RR_LOCATORS, précisant une liste de localisateurs de réflecteurs de route (ou RR pour Route Reflector) utilisés le cas échéant dans le réseau, afin de permettre l'établissement des sessions BGP avec ces réflecteurs de route ; et
- un champ BGP_TIMERS comprenant une liste de valeurs des différents temporisateurs BGP destinés à être appliqués lors de sessions BGP. Ces temporisateurs peuvent être notamment les temporisateurs connus ConnectRetryTime, HoldTime, KeepaliveTime, MinASORiginationIntervalTimer, et MinRouteAdvertisementIntervalTimer. Dans le mode de réalisation décrit ici, l'absence dans ce champ de la valeur de l'un des temporisateurs précités signifie que la valeur par défaut de ce temporisateur doit être utilisée (par exemple, 120s pour ConnectRetryTime, 90s pour HoldTime, le tiers de la valeur de HoldTime pour le temporisateur KeepaliveTime, 15s pour MinASORiginationIntervalTimer, etc.).

On note que ces différents champs ne sont donnés qu'à titre illustratif, et soit un sous-ensemble de ces champs, soit des champs supplémentaires peuvent être utilisés (comme un champ dans lequel le contrôleur 2 inclut une liste des adresses IP des dispositifs de réseau appartenant à un même niveau hiérarchique), le cas échéant. Les champs CLUSTER_SIZE, ROUTE_TYPES, RR_LOCATORS ou BGP_TIMERS sont typiquement optionnels et dépendent de la topologie du réseau, de son ingénierie en clusters, ou de la politique de routage. L'absence de l'un de ces champs dans le message CMD peut signifier que les valeurs définies par défaut par le protocole BGP doivent être appliquées, ou que ce champ est sans objet (par exemple, parce qu'il n'y a pas de réflecteurs de routes dans le réseau). Toutefois, le message CMD comprend préférentiellement au moins le champ ID comprenant des instructions de gestion des sessions BGP et le champ AS_NUMBER et/ou le champ SUPPLIED_ASN_RANGE pour l'allocation des numéros d'AS dans le réseau.

Une fois le message de commande CMD élaboré, le contrôleur 2 l'envoie ici par le biais de son module d'envoi 2B à un unique dispositif de réseau T du réseau R, à savoir au dispositif de réseau T11 dans l'exemple décrit ici (étape E30). La sélection de ce dispositif peut dépendre de différents critères : il s'agit par exemple d'un dispositif de réseau connecté directement au contrôleur 2, mais d'autres règles de sélection dépendant des niveaux hiérarchiques, du centre de données, etc. peuvent être envisagées.

En variante, le contrôleur 2 peut décider d'envoyer le message CMD à plusieurs dispositifs de réseau T. Toutefois, l'intérêt de n'envoyer ce message qu'à un unique dispositif est de limiter la volumétrie de la signalisation induite par la configuration automatique du réseau.

Le dispositif de réseau T11 reçoit, via son module de réception 10, le message CMD (premier message de commande au sens de l'invention pour le dispositif T11), et extrait de ce message les éléments de configuration (consignes et paramètres) reçus du contrôleur 2 et liés à l'activation du protocole de routage BGP dans le réseau R (étape E40).

Suite à cette extraction, il configure via son module de configuration 11, les valeurs des paramètres qu'il utilise pour établir des sessions BGP à partir des paramètres et des consignes qu'il a extraits du message de commande (étape E50).

Ainsi, dans l'exemple envisagé ici, le module de configuration 11 configure le numéro d'AS du dispositif T11 à la valeur donnée par le champ AS_NUMBER du message CMD.

De même, il configure la valeur des temporisateurs tels que ConnectRetryTime, HoldTime, KeepaliveTime, MinASORiginationIntervalTimer, ou MinRouteAdvertisementIntervalTimer avec les valeurs extraites du champ BGP_TIMERS du message CMD, etc. On note que si le message CMD comprend une configuration d'une interface non encore activée sur le dispositif de réseau T11, celui-ci mémorise la configuration idoine pour cette interface pour pouvoir l'utiliser ultérieurement lorsque l'interface sera activée.

En outre, conformément à l'invention, le dispositif de réseau T11 exécute par l'intermédiaire de son module d'exécution 12, les instructions de gestion de sessions BGP comprises le cas échéant dans le message CMD (étape E60). En l'espèce, dans l'exemple envisagé ici, ces instructions de gestion comprennent une instruction d'établir des sessions BGP avec tout ou partie de ses voisins (selon la valeur du champ ID).

Pour établir ces sessions BGP, il est nécessaire au dispositif de réseau T11 de connaître (et d'annoncer) les numéros d'AS associés à chacun de ses voisins et utilisés par ceux-ci lors des sessions BGP. Ces numéros d'AS peuvent varier en fonction de la valeur du champ ID et la politique de routage spécifiée par l'opérateur.

Ainsi, par exemple :
- si le champ ID a la valeur 0, le même numéro d'AS est associé aux voisins du dispositif de réseau T11 ;
- si le champ ID a la valeur 1, 2 ou 3, le même numéro d'AS ou un numéro d'AS différent (en fonction de ce qui est imposé par le champ ID) est associé aux voisins du dispositif de réseau T11 avec lesquels celui-ci établit des sessions. Si un numéro d'AS différent est requis par le champ ID, celui-ci est sélectionné par le dispositif T11 dans la plage de valeurs SUPPLIED ASN_RANGE ;
- si le champ ID a la valeur 4 et que la politique de routage souhaitée par l'opérateur du réseau impose un même numéro d'AS à tous les dispositifs de réseau appartenant à un même niveau hiérarchique, le même numéro d'AS que celui associé au dispositif T11 (c'est-à-dire celui indiqué par le champ AS_NUMBER du message CMD) est associé aux voisins du dispositif de réseau T11 avec lesquels celui-ci établit des sessions.

Bien entendu ces exemples ne sont donnés qu'à titre illustratif.

A l'issue de cette configuration, le dispositif réseau T11 dispose de tous les éléments dont il a besoin pour établir des sessions BGP avec ses voisins (autrement dit, avec les dispositifs de réseau avec lesquels il est directement relié) dans le réseau R.

Dans le mode de réalisation décrit ici, la valeur du champ ID indique également au dispositif de réseau T11 comment propager les éléments de configuration reçus dans le message CMD vers ses voisins. Il véhicule donc une consigne de propagation au sens de l'invention.

Dans une variante de réalisation, cette consigne de propagation est implicite dès lors qu'une consigne d'établissement de sessions BGP avec tous les voisins ou avec des voisins déterminés du dispositif de réseau est comprise dans le message de commande CMD reçu par le dispositif de réseau. Autrement dit, dans cette variante, la présence d'une telle consigne d'établissement de sessions BGP avec tous ses voisins ou avec des voisins déterminés est considérée par le dispositif de réseau T11 (et plus spécifiquement par son module 13) comme étant également une consigne de propagation vers ces mêmes voisins des éléments de configuration compris dans le message de commande, de sorte que la présence de la consigne d'établissement de sessions BGP active automatiquement la propagation des éléments de configuration par le module de propagation 13 du dispositif de réseau T11 aux voisins identifiés dans la consigne d'établissement de sessions BGP.

Dans le mode de réalisation décrit ici, la propagation des éléments de configuration (par le module de propagation 13) et l'établissement des sessions BGP (par le module d'exécution 12) sont réalisées via l'envoi d'un même message M1 à chaque voisin concerné. Ce message M1 est un message BGP OPEN d'établissement d'une session BGP, modifié de sorte à inclure de nouveaux champs comprenant tout ou partie des éléments de configuration extraits du message CMD et devant être appliqués par le dispositif de réseau qui reçoit le message M1. Le message modifié inclut en particulier ici un ou plusieurs numéros d'AS à utiliser par le dispositif de réseau destinataire du message et déterminés par le dispositif de réseau T11 en fonction notamment de la valeur des champs ID, AS_NUMBER et SUPPLIED_ASN_RANGE comme indiqué précédemment.

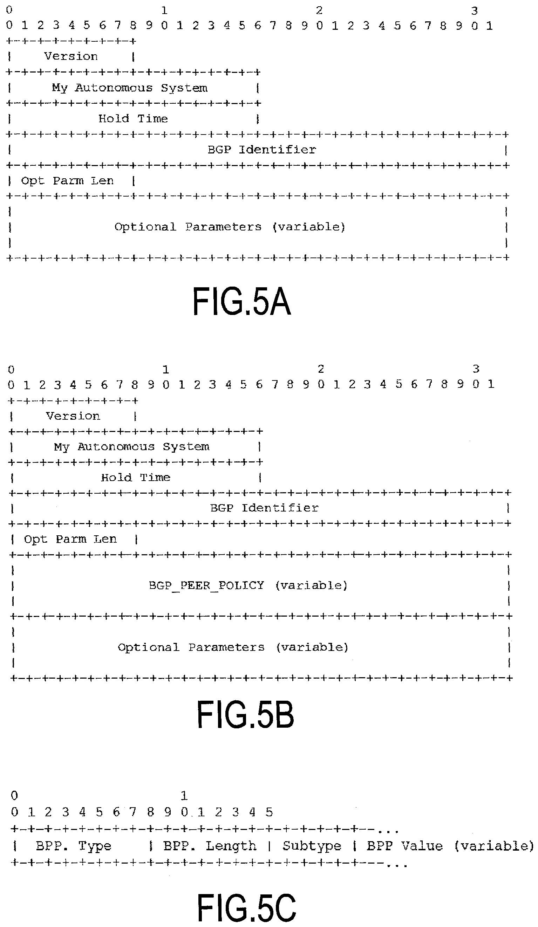

Le message OPEN utilisé par le protocole BGP est décrit dans le document RFC 4271, au même titre que les autres messages KEEPALIVE, UPDATE et NOTIFICATION qui peuvent être échangés entre deux dispositifs de réseau dans le cadre du protocole BGP. Sa structure et son contenu sont illustrés à la **figure 5A****,** et rappelés ci-dessous. Le message BGP OPEN comprend les champs suivants :
- un champ « Mon système autonome », qui indique le numéro d'AS du dispositif de réseau qui a émis le message de type OPEN ;
- un champ « Temps de maintien », qui indique la proposition (exprimée en secondes) du dispositif de réseau qui a émis le message de type OPEN pour la valeur maximale de la période de temps qui s'écoule entre la réception de deux messages de type KEEPALIVE (et/ou de type UPDATE) consécutifs. Sur réception du message OPEN, un routeur BGP doit calculer cette valeur, par comparaison avec celle consignée dans le champ « Hold Time » du message reçu, et celle qui a été communiquée par d'autres voisins BGP, par un contrôleur, ou bien utiliser une valeur par défaut.
- un champ « Identifiant BGP », qui correspond typiquement à l'adresse IP (Internet Protocol) affectée au dispositif de réseau émetteur du message OPEN pour son identification (au sens de la connexion BGP) ; et
- un champ « Paramètres optionnels », contenant la liste des paramètres optionnels susceptibles d'être véhiculés dans le message de type OPEN. Ces paramètres sont codés selon le principe TLV (Type Longueur Valeur).

Le message OPEN ainsi défini vise d'une part, à établir une session BGP avec le dispositif de réseau auquel il est envoyé, et d'autre part à permettre au dispositif de réseau émetteur de ce message d'annoncer les paramètres qu'il utilise lors de ses sessions BGP (par exemple numéro d'AS, ou adresse IP).

Dans le mode de réalisation décrit ici, le message d'établissement de session BGP et d'annonce OPEN est modifié pour devenir un message d'établissement de session BGP et de commande permettant de configurer le dispositif de réseau auquel il est adressé par le dispositif T11. A cet effet, comme indiqué précédemment et illustré sur la **figure 5B****,** un nouveau champ BGP_PEER_POLICY est ajouté au message OPEN. Dans le mode de réalisation décrit ici, ce champ peut comprendre un ou plusieurs objets BPP structurés selon un encodage TLV, en fonction du nombre d'éléments de configuration à transmettre (par exemple, un objet par élément de configuration). Plus précisément, chaque objet est défini par, comme représenté à la **figure 5C** :
- un type BPPType, c'est-à-dire par un code renseignant qu'il s'agit d'un objet de type BGP_PEER_POLICY contenant des éléments de configuration destinés à être appliqués ou exécutés par le dispositif de réseau qui le reçoit ;
- une longueur BPPLength, qui indique la taille de l'objet ; et
- un sous-type BPPSubType indiquant le type d'objet BGP_PEER_POLICY inclus dans le message OPEN, c'est-à-dire le type d'éléments de configuration décrit par cet objet. A titre d'exemple, les valeurs suivantes peuvent être définies pour ce sous-type :
   ∘ 0 : pour fournir un numéro d'AS au dispositif de réseau destinataire du message OPEN pour établir la session BGP ;
   ∘ 1 : pour fournir des valeurs de temporisateurs ;
   ∘ 2 : pour fournir une plage de valeurs parmi lesquelles le destinataire du message OPEN pourra sélectionner un numéro d'AS (cette plage peut être globale, ou spécifique à chaque niveau hiérarchique, etc.) ;
   ∘ 3 : pour fournir une instruction de gestion de sessions BGP, cette instruction pouvant être structurée de manière identique ou similaire à ce qui a été décrit précédemment pour le champ ID du message CMD ;
   ∘ etc.

Le choix du nombre de sous-types et de leurs valeurs dépend des éléments de configuration susceptibles d'être transmis via le message OPEN modifié ; et
- la valeur BPPValue de l'élément de configuration identifié par le sous-type BPPSubType (par exemple, le numéro d'AS si le sous-type BPPSubType est à 0, la plage de valeurs d'ASN si le sous-type BPPSubType est à 2, etc.).

Le dispositif de réseau T11 renseigne via son module de propagation 13, le champ BGP_PEER_POLICY de chaque message OPEN modifié destiné à l'un de ses voisins, avec les éléments de configuration destinés à être appliqués par ce voisin. Si dans les instructions de gestion, il a reçu l'instruction d'allouer un numéro d'AS à ses voisins parmi une ou plusieurs plages de valeurs prédéfinies, le module d'exécution 12 alloue ces numéros d'AS selon la stratégie qui lui a été demandée d'appliquer, et le module de propagation 13 renseigne ces numéros d'AS dans un objet BGP_PEER_POLICY. L'objet BGP_PEER_POLICY peut en outre comprendre une liste des adresses IP associées à des dispositifs de réseau.

Dans un autre mode de réalisation de l'invention, le module de propagation 13 peut ajouter au message OPEN modifié des éléments de configuration obtenus par un autre biais que par le message de commande CMD reçu du contrôleur 2. On peut par exemple envisager un cas d'application de l'invention dans lequel le dispositif de réseau 11 a reçu deux messages de commande issus de deux contrôleurs différents et propage à destination de ses voisins un message comprenant des éléments de configuration issus des deux messages de commande (éléments de configuration complémentaires compris dans chacun des messages) ou sélectionnés parmi les deux messages de commande (par exemple, si certains éléments de configuration sont contradictoires).

Une fois les messages de commande M1 générés (deuxièmes messages de commande au sens de l'invention pour le dispositif T11), ceux-ci sont envoyés par le dispositif de réseau T11 à leurs destinataires (tels qu'identifiés dans les instructions de propagation renseignées dans le champ ID du message CMD), via son module de propagation 13 (étape E70).

On note que dans le mode de réalisation décrit ici, si le dispositif de réseau T11 détecte que l'un des voisins auquel il doit envoyer un message de commande M1 conformément aux instructions de gestion de sessions et/ou de propagation qu'il a reçues, est déjà configuré pour activer le protocole BGP (par exemple, ce même voisin lui a envoyé auparavant un message OPEN d'établissement d'une session BGP incluant un numéro d'AS et indiquant par là-même qu'il est déjà configuré pour utiliser le protocole BGP), le dispositif de réseau T11 annule l'envoi par son module d'exécution 12 du message de commande M1 vers ce voisin.

Par souci de simplification, seul l'envoi du message de commande M1 contenant le champ BGP_PEER_POLICY au dispositif de réseau T21 est représenté sur la figure 4.

Le dispositif de réseau T21 reçoit, via son module de réception 10, le message de commande M1 (premier message de commande au sens de l'invention pour le dispositif T21), et extrait de ce message les éléments de configuration (consignes et paramètres) inclus dans le champ BGP_PEER_POLICY et liés à l'activation du protocole de routage BGP dans le réseau R (étape E80).

Suite à cette extraction, il configure via son module de configuration 11, les valeurs des paramètres qu'il utilise pour établir des sessions BGP à partir des paramètres et des consignes qu'il a extraits du message de commande M1 (par exemple numéro d'AS, etc.), comme l'a fait précédemment le dispositif de réseau T11 à partir des éléments de configuration compris dans le message CMD (étape E90). A l'issue de cette configuration, le dispositif réseau T21 dispose de tous les éléments dont il a besoin pour établir des sessions BGP avec ses voisins dans le réseau R.

Il accepte par ailleurs l'établissement de la session BGP avec le dispositif de réseau T11 (étape E100).

Puis, conformément à l'invention et comme l'a fait précédemment le dispositif de réseau T11, le dispositif de réseau T21 applique par l'intermédiaire de son module d'exécution 12, les instructions de gestion de sessions BGP et de propagation comprises dans le message M1 (étape E110). En l'espèce, dans l'exemple envisagé ici, ces instructions de gestion comprennent une instruction d'établir des sessions BGP avec tout ou partie de ses voisins (selon la valeur du champ ID) et une instruction de propager les éléments de configuration vers ces mêmes voisins (instruction de propagation au sens de l'invention). A cet effet, le dispositif de réseau T21 émet un message de commande M2 vers chacun de ses voisins identifiés dans les instructions de gestion de sessions qu'il a reçues dans le message M1. Ce message M2 s'appuie sur un message OPEN modifié tel que décrit précédemment et illustré à la figure 5B, et dont le champ BGP_PEER_POLICY est renseigné avec les éléments de configuration extraits du message M1 qui concernent les voisins en question du dispositif de réseau T21.

Les messages M2 ainsi élaborés (deuxièmes messages de commande au sens de l'invention pour le dispositif T21) sont envoyés par le dispositif réseau T21 à leurs destinataires via son module d'exécution 12 (étape E120).

Les destinataires des messages M2, sur réception de ceux-ci, appliquent à leur tour les éléments de configuration contenus dans ces messages, établissent les sessions BGP requises, et continuent de propager de proche en proche ces éléments jusqu'à ce que l'ensemble des dispositifs de réseau T soient configurés. Autrement dit, les étapes précédemment décrites pour le dispositif de réseau T21 sont répétées par l'ensemble des dispositifs du réseau recevant un message de commande de l'un de ses pairs contenant des éléments de configuration. On note que les messages de commande propagés vers les dispositifs du réseau appartenant au niveau hiérarchique inférieur (NIV3 dans l'exemple de la figure 1) ne contiennent préférentiellement pas d'instruction de propagation des éléments de configuration ; s'ils en contiennent, celles-ci ne sont préférentiellement pas prises en compte par les dispositifs en question, étant donné que ceux-ci ne disposent plus de voisins à configurer vers lesquels transmettre ces éléments de configuration.

En outre, si des éléments de configuration sont mis à jour par le contrôleur 2, une procédure identique à celle décrite précédemment peut être mise en oeuvre pour propager ces nouveaux éléments de configuration en utilisant un message BGP UPDATE modifié de façon identique à ce qui a été indiqué précédemment pour le message OPEN.

Par ailleurs, dans le mode de réalisation décrit ici, si un dispositif du réseau R est déjà configuré et reçoit un message de commande de l'un de ses pairs (voisins) lui demandant d'appliquer des éléments de configuration conformément à l'invention, ce dispositif est configuré pour refuser les éléments de configuration qu'il lui est demandé d'appliquer.

Dans un autre mode de réalisation, si un (premier) dispositif du réseau (par exemple T11 dans l'exemple ci-dessus) apte à mettre en oeuvre l'invention détecte qu'un (deuxième) dispositif du réseau R (par exemple T21 dans l'exemple ci-dessus) auquel il doit transmettre un message de commande comprenant des éléments de configuration conformément aux consignes de propagation qu'il a reçues, est déjà configuré pour l'activation du protocole de routage, le premier dispositif annule l'envoi du message de commande à ce deuxième dispositif.

En variante dans un tel contexte, l'envoi par le premier dispositif du message de commande à ce deuxième dispositif est maintenu, mais le message de commande ne contient que des informations susceptibles d'être utilisées par les voisins du deuxième dispositif.

On peut envisager différentes façons pour le premier dispositif de détecter que le deuxième dispositif est déjà configuré et pour décider si le message de commande doit être envoyé ou non.

Ainsi, selon une première option, le deuxième dispositif étant déjà configuré avec un numéro d'AS, celui-ci peut envoyer au premier dispositif, suite à l'établissement d'une connexion TCP avec celui-ci, un message BGP OPEN comprenant son numéro d'AS. La réception d'un tel message annonçant le numéro d'AS du deuxième dispositif au premier dispositif permet au premier dispositif de détecter que le deuxième dispositif est déjà configuré, et le cas échéant, d'annuler l'envoi du message de commande au deuxième dispositif. Le premier dispositif peut également décider d'envoyer un tel message de commande, mais celui-ci ne contiendra que des informations susceptibles d'être utilisées par les voisins du deuxième dispositif (par exemple des paramètres d'établissement de sessions tels que des numéros d'AS ou une plage de numéros d'AS).

Selon une deuxième option, on peut envisager que ce soit le deuxième dispositif qui indique explicitement au premier dispositif qu'il a besoin d'éléments de configuration pour ses voisins (par exemple, d'une plage de numéros d'AS pour allouer à ses voisins). A cet effet, l'objet BPP décrit précédemment en référence à la figure 5C peut inclure, en plus des éléments BPPType, BPPLength, Subtype et BPPValue, un bit spécifique, par exemple un bit R (pour Request), positionné à 1 lorsque le deuxième dispositif requiert une configuration (pour lui et/ou pour ses voisins) ou à 0 lorsque le message BGP OPEN est utilisé pour annoncer une configuration existante. Cet objet BPP peut être inclus par le deuxième dispositif dans le message BGP OPEN qu'il envoie au premier dispositif suite à l'établissement d'une connexion TCP avec celui-ci, comme indiqué précédemment pour la première option. La présence de ce bit positionné à 1 et l'absence de configuration locale annoncée dans le message BGP OPEN envoyé par le deuxième dispositif est interprétée par le premier dispositif comme une demande explicite d'éléments de configuration pour le deuxième dispositif et pour ses voisins.

Selon une troisième option, suite à la détection d'une connexion établie avec le premier dispositif, le deuxième dispositif, s'il est déjà configuré, peut envoyer un message d'annonce de sa configuration locale (et en particulier de son numéro d'AS) au premier dispositif. Un tel message peut être par exemple un message d'annonce RA (Router Advertisement) ou de sollicitation RS (Router Solicitation) tels que décrits dans l'art antérieur et mentionnés précédemment. On peut envisager que ce message contienne un bit additionnel R tel que décrit dans la deuxième option pour le message BGP OPEN, indiquant au premier dispositif que des éléments de configuration de ses voisins sont requis auprès du premier dispositif. La réception d'un tel message permet au premier dispositif de détecter que le deuxième dispositif est déjà configuré, et le cas échéant, de désactiver l'envoi du message de commande au deuxième dispositif ou d'envoyer un message de commande ne contenant que des informations susceptibles d'être utilisées par les voisins du deuxième dispositif (par exemple des paramètres d'établissement de sessions tels que des numéros d'AS ou une plage de numéros d'AS).

Il convient de noter que d'autres dispositifs du réseau R peuvent être configurés pour refuser l'application des éléments de configuration qui leur sont transmis via l'invention. Il s'agit par exemple des dispositifs placés en bordure du réseau R et qui réalisent l'acheminement du trafic vers les réseaux extérieurs au réseau R (par exemple vers le réseau Internet). C'est le cas par exemple du dispositif de réseau Text représenté sur la figure 1.

Pour distinguer ces dispositifs des autres dispositifs du réseau appliquant l'invention, on peut envisager l'introduction d'un nouveau paramètre de configuration pour chaque dispositif du réseau, nommé par exemple PEER_SUPPLIED_CONFIG, et qui indique si le dispositif du réseau est compatible ou non avec l'invention, autrement dit, s'il peut être configuré par l'un de ses pairs conformément à l'invention ou non. Ce paramètre peut être valorisé par défaut à « VRAI » pour l'ensemble des dispositifs du réseau R à l'exception des dispositifs situés en bordure de réseau et qui échangent des routes avec des dispositifs ou routeurs de réseaux extérieurs pour lesquels il doit être valorisé à « FAUX ». Ainsi, un dispositif du réseau R ayant un paramètre PEER_SUPPLIED_CONFIG valorisé à « FAUX » est configuré pour ignorer et rejeter toute proposition d'éléments de configuration envoyée par un voisin (en particulier si celui-ci contient une proposition de numéro d'AS). Optionnellement, ce dispositif peut envoyer un message d'erreur à l'émetteur du message de commande comprenant les éléments de configuration pour que celui-ci cesse de lui envoyer des éléments de configuration.

Ainsi, grâce à l'invention, on obtient une configuration automatique et distribuée des dispositifs du réseau R permettant l'activation du protocole BGP : à l'issue de cette configuration, les sessions BGP sont établies entre tous les pairs conformément à la politique de routage souhaitée par l'opérateur du centre de données et le protocole BGP est activé.

Dans le mode de réalisation décrit précédemment, le contrôleur 2 émet un message de commande CMD contenant les éléments de configuration vers le dispositif de réseau T11 auquel il est directement connecté et les éléments de configuration sont propagés de proche en proche dans le réseau R au moyen de messages BGP OPEN modifiés d'établissement de sessions BGP.

Dans un autre mode de réalisation, le réseau R ne comprend pas de contrôleur ayant un rôle centralisé, mais uniquement des dispositifs de réseau tels que des routeurs. Dans un tel contexte, plutôt que de définir un nouveau message BGP_PEER_POLICY et de modifier le message BGP OPEN, les éléments de configuration du réseau R liés à l'activation du protocole de routage BGP peuvent être véhiculés dans des messages RA échangés entre les dispositifs T d'un réseau, et plus spécifiquement dans une option nouvellement définie de ce message (nommée par exemple BGP_PEER_POLICY). Le « premier » dispositif de réseau à l'origine du premier message de commande déclenchant la configuration de proche en proche des autres dispositifs du réseau peut obtenir les éléments de configuration liés à l'application du protocole de routage BGP comme cela a été décrit précédemment pour la configuration du contrôleur 2 (par exemple, configuration explicite via une connexion Telnet ou via NETCONF). L'envoi du message RA peut être automatique ou faire l'objet d'une réponse à un message RS.

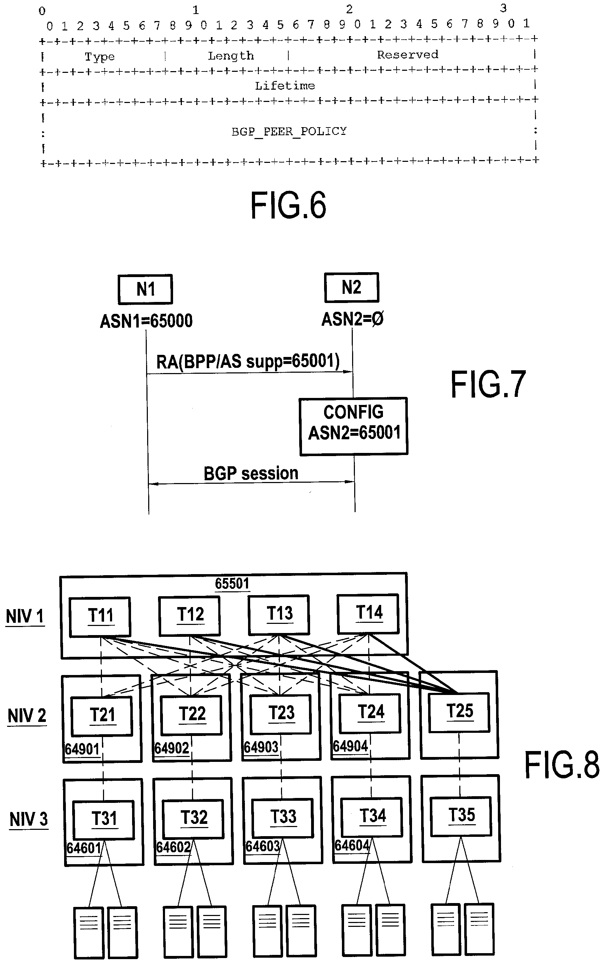

La **figure 6** illustre un exemple de format de l'option BGP_PEER_POLICY. Le champ « Durée de validité » consigne la durée de validité de l'option. Il est identique à celui défini par exemple dans le document RFC 6106. Le champ BPP de la nouvelle option ainsi définie peut être structuré selon le même formalisme que celui du champ BGP_PEER_POLICY du message OPEN modifié illustré à la figure 5B.

On note que dans ce contexte où un message RA est utilisé pour véhiculer de proche en proche les éléments de configuration entre les dispositifs de réseau, une session BGP est établie entre deux dispositifs de réseau via un message distinct du message utilisé pour véhiculer les éléments de configuration. De ce fait, ce n'est pas nécessairement le dispositif de réseau qui transmet le message de commande comprenant les éléments de configuration à l'un de ses pairs qui est à l'origine de la demande d'établissement de session BGP avec ce pair.

La **figure 7** illustre un exemple d'application de l'invention. Elle représente une procédure d'allocation et de communication automatique par un dispositif de réseau N1 d'un numéro d'AS à un dispositif de réseau N2. Quand un lien entre les deux dispositifs de réseau N1 et N2 est activé, le dispositif de réseau N1 envoie immédiatement un message de commande RA comprenant une option BGP_PEER_POLICY telle qu'illustrée à la figure 8 et comprenant parmi les éléments de configuration véhiculés dans cette option, un numéro d'AS (65001 dans l'exemple illustré) à appliquer par le dispositif de réseau N2 et alloué par le dispositif de réseau N1. Aussi, ce message inclut le numéro d'AS du dispositif à l'origine de l'émission du message RA. Sur réception du message de commande RA, le dispositif de réseau N2 extrait le numéro d'AS fourni par le dispositif de réseau N1, et se configure avec ce numéro d'AS fourni de sorte à activer le protocole BGP. A ce stade, les dispositifs de réseau N1 et N2 disposent des éléments de configuration nécessaires pour l'établissement d'une session BGP entre eux (c'est-à-dire leur numéro d'AS local, et le numéro d'AS du dispositif voisin. Celle-ci peut être établie à l'initiative de l'un ou l'autre des dispositifs. Il convient de noter que la configuration automatique des dispositifs de réseau peut être combinée à une procédure de découverte automatique des éléments de configuration des dispositifs du réseau par leurs pairs. Ainsi, un dispositif du réseau configuré conformément à l'invention et disposant d'un numéro d'AS, peut interroger un autre dispositif du réseau via un message de sollicitation RS dès lors qu'il détecte une connexion via l'une de ses interfaces avec cet autre dispositif de réseau. Ce message RS a pour but d'acquérir ses éléments de configuration BGP, et notamment son numéro d'AS. Une session BGP est établie automatiquement entre les deux dispositifs de réseau dès que ceux-ci ont échangé leurs numéros d'AS.

Dans les exemples décrits précédemment, on a envisagé la configuration de l'ensemble des dispositifs d'un réseau R pour activer l'utilisation du protocole BGP dans ce réseau. L'invention peut également s'appliquer pour configurer des dispositifs (par exemple des routeurs) ajoutés à tout moment par l'opérateur du centre de données pour étendre les capacités de son réseau R. La **figure 8** illustre par exemple l'ajout de deux dispositifs T25 et T35 dans le réseau représenté à la figure 1 lorsque celui-ci ne comprend pas de contrôleur 2. On suppose que les numéros d'AS alloués aux autres dispositifs du réseau R via la mise en oeuvre de l'invention sont ceux représentés sur la figure 8.

Les dispositifs T25 et T35 nouvellement ajoutés ne disposent pas des informations nécessaires pour établir des sessions BGP avec leurs voisins. On suppose que ces deux dispositifs sont conformes à l'invention, et que le dispositif T25 est relié aux dispositifs T11, T12, T13 et T14, et le dispositif T35 au dispositif T25.

Quand le lien T11-T25 est activé, un message de commande RA est émis par le dispositif de réseau T11 comprenant dans l'option BGP_PEER_POLICY les éléments de configuration suivants :
- numéro d'AS à utiliser par le dispositif T25 : 64905 ;
- taille de cluster du niveau inférieur CLUSTER_LL=1 ;
- plage de valeurs pour l'allocation de numéros d'AS à ses voisins appartenant à un niveau hiérarchique inférieur : [64601-64899] ;
- valeurs de temporisateurs ;
- etc.

On note que dans cet exemple, la mention d'une plage de valeurs dans l'option BGP_PEER_POLICY comprend une instruction implicite aux dispositifs recevant le message de commande RA de puiser dans cette plage pour allouer des numéros d'AS à leurs voisins (instruction de gestion de sessions au sens de l'invention).

Sur réception de ce message de commande, le dispositif de réseau T25 extrait les éléments de configuration contenus dans le message et se configure avec ceux-ci. Puis une session BGP est établie automatiquement entre les dispositifs de réseau T11 et T25, à l'initiative du dispositif de réseau T11 ou du dispositif de réseau T25.

Si des liens avec les autres dispositifs de réseau du niveau hiérarchique NIV1 sont activés (par exemple, ici avec les dispositifs T11, T12, T13 et T14), alors le dispositif de réseau T15 peut annoncer sa configuration et en particulier son numéro d'AS via des messages RA avec ces dispositifs. Des sessions BGP sont alors établies automatiquement avec ces dispositifs de réseau.

Concomitamment à ces échanges, le dispositif de réseau T25 alloue, parmi la plage de valeurs qui lui a été communiquée par le dispositif de réseau T11, un numéro d'AS au dispositif de réseau T35 du niveau hiérarchique NIV3 auquel il est relié, conformément à l'instruction de gestion de sessions transmises dans le message RA reçu du dispositif T11. Il envoie un message de commande RA au dispositif de réseau T35 comprenant le numéro d'AS qu'il lui a alloué (par exemple 64605) et les valeurs de temporisateurs à appliquer aux sessions BGP. Suite à ce message, une session BGP est établie automatiquement entre les dispositifs de réseau T25 et T35.

La nouvelle extension du réseau R devient alors opérationnelle (c'est-à-dire que les nouveaux noeuds de ce réseau T25 et T35 disposent des informations de routage nécessaires et sont visibles par les autres noeuds de niveau supérieur).

On note que la procédure de configuration automatique du réseau R peut être initialisée à partir de n'importe quel dispositif du réseau R, et notamment depuis n'importe quel niveau hiérarchique. Si un dispositif du réseau reçoit plusieurs propositions d'éléments de configuration de plusieurs voisins en raison de la propagation de proche en proche, il doit choisir une proposition parmi celles qu'il a reçues et en informer ses voisins. Plusieurs critères de sélection peuvent être utilisés comme par exemple l'ordre de réception des propositions ou une sélection de ces propositions, en fonction de l'adresse IP source des voisins ayant émis une proposition.

L'invention a été décrite ici dans le cadre d'un réseau d'un centre de données. Bien qu'ayant une application privilégiée dans ce contexte, l'invention peut s'appliquer à tout type de réseau utilisant un protocole de routage dynamique.

## Revendications

1. Procédé de configuration destiné à être mis en oeuvre dans un réseau (R) comprenant une pluralité de dispositifs (T) et utilisant un protocole de routage dynamique, ce procédé de configuration comprenant :
- une étape de réception (E40,E80), par un premier dispositif du réseau (T11,T21), d'un premier message de commande (CMD,M1) comprenant des éléments de configuration requis pour l'activation du protocole de routage dynamique dans le réseau de sorte à rendre son utilisation opérationnelle dans le réseau ;
- une étape de configuration (E50, E90) par le premier dispositif de paramètres d'établissement de sessions selon ledit protocole utilisés par le premier dispositif à partir d'éléments de configuration compris dans le premier message ; et
- si les éléments de configuration compris dans le premier message comprennent au moins une instruction de gestion de sessions selon ledit protocole dans le réseau, une étape d'exécution (E60, E110) par le premier dispositif de ladite au moins une instruction de gestion ;
- le procédé étant **caractérisé en ce qu'**il comprend, si les éléments de configuration compris dans le premier message comprennent une consigne de propagation des éléments de configuration dans le réseau, une étape d'envoi (E70,E120) par le premier dispositif conformément à ladite consigne de propagation d'au moins un deuxième message de commande (M1,M2) vers au moins un deuxième dispositif du réseau (T21,T31), ce deuxième message de commande comprenant tout ou partie des éléments de configuration compris dans le premier message.

2. Procédé de configuration selon la revendication 1 dans lequel l'étape d'exécution comprend en outre une étape d'établissement (E70,E120) d'au moins une session selon ledit protocole de routage avec ledit au moins un deuxième dispositif.

3. Procédé de configuration selon la revendication 2 dans lequel ledit au moins un deuxième message est un message d'établissement d'une session selon ledit protocole de routage.

4. Procédé de configuration selon l'une quelconque des revendications 1 à 3 dans lequel ladite au moins une instruction de gestion des sessions comprend au moins une consigne parmi :
- une consigne d'établir une session selon ledit protocole de routage avec tous les dispositifs du réseau en relation directe ;
- une consigne d'établir une session selon ledit protocole de routage avec tous les dispositifs du réseau en relation directe via une interface prédéterminée ;
- une consigne destinée à être appliquée par au moins un dispositif du réseau d'établir une session selon ledit protocole de routage avec tous les dispositifs du réseau en relation directe et qui appartiennent à un même niveau hiérarchique dans le réseau ; et
- une consigne d'établir une session selon ledit protocole de routage avec au moins un dispositif dont un identifiant de routage est inclus dans ladite consigne.

5. Procédé de configuration selon l'une quelconque des revendications 1 à 4 dans lequel les éléments de configuration compris dans le premier message comprennent un numéro de système autonome à utiliser par le premier dispositif et/ou au moins une plage de valeurs prédéfinie pour la sélection de numéros de systèmes autonomes pouvant être utilisés par des dispositifs du réseau.

6. Procédé de configuration selon l'une quelconque des revendications 1 à 5 dans lequel les éléments de configuration compris dans le premier message comprennent en outre au moins un élément parmi :
- une taille de cluster pour au moins un niveau hiérarchique du réseau ;
- un type de routes à annoncer par l'intermédiaire du protocole de routage ;
- une liste de localisateurs de réflecteurs de route utilisés le cas échéant dans le réseau ;
- un identifiant de confédération BGP de systèmes autonomes ; et
- au moins une valeur de temporisateur à appliquer lors de sessions selon ledit protocole de routage.

7. Procédé de configuration selon l'une quelconque des revendications 1 à 6 comprenant une étape de détection qu'un dit deuxième dispositif est déjà configuré pour l'activation du protocole de routage, ladite étape de détection conduisant à une annulation de l'étape d'envoi du deuxième message à ce deuxième dispositif.

8. Procédé de configuration selon l'une quelconque des revendications 1 à 6 comprenant une étape de détection qu'un dit deuxième dispositif est déjà configuré pour l'activation du protocole de routage, ladite étape de détection conduisant à maintenir l'étape d'envoi du deuxième message à ce deuxième dispositif, le deuxième message ne contenant que des informations susceptibles d'être utilisées par les voisins du deuxième dispositif.

9. Procédé de configuration selon l'une quelconque des revendications 1 à 8 dans lequel ledit protocole de routage est le protocole BGP (Border Gateway Protocol).

10. Programme d'ordinateur (PROG) comportant des instructions pour l'exécution des étapes du procédé de configuration selon l'une quelconque des revendications 1 à 9 lorsque ledit programme est exécuté par un ordinateur.

11. Support d'enregistrement (7) lisible par un ordinateur sur lequel est enregistré un programme d'ordinateur comprenant des instructions pour l'exécution des étapes du procédé de configuration selon l'une quelconque des revendications 1 à 9.

12. Dispositif (T11-T14,T21-T24,T31-T34) d'un réseau (R) comprenant une pluralité de dispositifs et utilisant un protocole de routage dynamique, ce dispositif, dit premier dispositif, comprenant :
- un module de réception (10) apte à recevoir un premier message de commande comprenant des éléments de configuration requis pour l'activation du protocole de routage dynamique dans le réseau de sorte à rendre son utilisation opérationnelle dans le réseau ;
- un module de configuration (11) adapté à configurer des paramètres d'établissement de sessions selon ledit protocole utilisés par le premier dispositif à partir d'éléments de configuration compris dans le premier message ; et
- un module d'exécution (12) configuré, si les éléments de configuration compris dans le premier message comprennent au moins une instruction de gestion de sessions selon ledit protocole dans le réseau, pour exécuter ladite au moins une instruction de gestion ;
- ledit dispositif étant **caractérisé en ce qu'**il comprend un module de propagation (13), activé si les éléments de configuration compris dans le premier message comprennent une consigne de propagation des éléments de configuration dans le réseau, ledit module de propagation étant configuré pour envoyer au moins un deuxième message de commande vers au moins un deuxième dispositif du réseau conformément à ladite consigne de propagation, ce deuxième message de commande comprenant tout ou partie des éléments de configuration compris dans le premier message.

13. Système de communication (1) d'un réseau utilisant un protocole de routage dynamique, ledit système comprenant une pluralité de dispositifs (T11-T14,T21-T24,T31-T34) selon la revendication 12, aptes à propager de proche en proche des éléments de configuration liés à l'activation du protocole de routage dans le réseau.

14. Système de communication (1) selon la revendication 13 comportant en outre un contrôleur (2) comprenant :
- un module de génération (2A), configuré pour générer un message de commande comprenant des éléments de configuration pour l'activation du protocole de routage dynamique dans le réseau ; et
- un module d'envoi (2B), configuré pour envoyer ledit message de commande à destination d'un unique dispositif du réseau conforme à la revendication 12.

15. Système (1) selon la revendication 13 ou 14 comportant en outre au moins un dispositif supplémentaire (Text) configuré pour refuser d'appliquer ledit deuxième message de commande reçu d'un dit premier dispositif du réseau.

## Patentansprüche

1. Konfigurationsverfahren, das dazu bestimmt ist, in einem Netzwerk (R) umgesetzt zu werden, das eine Vielzahl von Vorrichtungen (T) beinhaltet und ein dynamisches Routing-Protokoll verwendet, wobei dieses Konfigurationsverfahren Folgendes beinhaltet:
- einen Schritt des Empfangens (E40, E80), durch eine erste Vorrichtung des Netzwerks (T11, T21), einer ersten Steuernachricht (CMD, M1), die Konfigurationselemente beinhaltet, die zur Aktivierung des dynamischen Routing-Protokolls in dem Netzwerk erforderlich sind, um seine Verwendung in dem Netzwerk wirksam zu machen;
- einen Schritt des Konfigurierens (E50, E90), durch die erste Vorrichtung, von Parametern für den Aufbau von Sitzungen gemäß dem Protokoll, die von der ersten Vorrichtung verwendet werden, anhand von in der ersten Nachricht enthaltenen Konfigurationselementen; und
- wenn die in der ersten Nachricht enthaltenen Konfigurationselemente mindestens eine Anweisung zur Verwaltung von Sitzungen gemäß dem Protokoll in dem Netzwerk beinhalten, einen Schritt des Ausführens (E60, E110), durch die erste Vorrichtung, der mindestens einen Verwaltungsanweisung;
- wobei das Verfahren **dadurch gekennzeichnet ist, dass** es, wenn die in der ersten Nachricht enthaltenen Konfigurationselemente einen Befehl zur Verbreitung der Konfigurationselemente in dem Netzwerk beinhalten, einen Schritt des Sendens (E70, E120), durch die erste Vorrichtung in Übereinstimmung mit dem Verbreitungsbefehl, mindestens einer zweiten Steuernachricht (M1, M2) an mindestens eine zweite Vorrichtung des Netzwerks (T21, T31) beinhaltet, wobei diese zweite Steuernachricht alle oder einen Teil der in der ersten Nachricht enthaltenen Konfigurationselemente beinhaltet.

2. Konfigurationsverfahren nach Anspruch 1, wobei der Ausführungsschritt ferner einen Schritt des Aufbauens (E70, E120) mindestens einer Sitzung gemäß dem Routing-Protokoll mit der mindestens einen zweiten Vorrichtung beinhaltet.

3. Konfigurationsverfahren nach Anspruch 2, wobei die mindestens eine zweite Nachricht eine Nachricht für den Aufbau einer Sitzung gemäß dem Routing-Protokoll ist.

4. Konfigurationsverfahren nach einem beliebigen der Ansprüche 1 bis 3, wobei die mindestens eine Anweisung zur Verwaltung der Sitzungen mindestens einen Befehl aus Folgenden beinhaltet:
- einen Befehl zum Aufbauen einer Sitzung gemäß dem Routing-Protokoll mit allen Vorrichtungen des Netzwerks mit direkter Verbindung;
- einen Befehl zum Aufbauen einer Sitzung gemäß dem Routing-Protokoll mit allen Vorrichtungen des Netzwerks mit direkter Verbindung über eine vorbestimmte Schnittstelle;
- einen Befehl, der dazu bestimmt ist, durch mindestens eine Vorrichtung des Netzwerks angewendet zu werden, zum Aufbauen einer Sitzung gemäß dem Routing-Protokoll mit allen Vorrichtungen des Netzwerks mit direkter Verbindung und die zu einer gleichen Hierarchieebene in dem Netzwerk gehören; und
- einen Befehl zum Aufbauen einer Sitzung gemäß dem Routing-Protokoll mit mindestens einer Vorrichtung, von der eine Routing-Kennung in dem Befehl eingeschlossen ist.

5. Konfigurationsverfahren nach einem beliebigen der Ansprüche 1 bis 4, wobei die in der ersten Nachricht enthaltenen Konfigurationselemente eine autonome Systemnummer, die durch die erste Vorrichtung zu verwenden ist, und/oder mindestens einen vordefinierten Wertebereich für die Auswahl von autonomen Systemnummern, die durch Vorrichtungen des Netzwerks verwendet werden können, beinhalten.

6. Konfigurationsverfahren nach einem beliebigen der Ansprüche 1 bis 5, wobei die in der ersten Nachricht enthaltenen Konfigurationselemente ferner mindestens ein Element aus Folgenden beinhalten:
- eine Clustergröße für mindestens eine Hierarchieebene des Netzwerks;
- einen Routentyp, der mittels des Routing-Protokolls anzukündigen ist;
- eine Liste von Lokalisatoren von Routenreflektoren, die in dem Netzwerk ggf. verwendet werden;
- eine Kennung einer BGP-Konföderation von autonomen Systemen; und
- mindestens einen Zeitgeberwert, der bei Sitzungen gemäß dem Routing-Protokoll anzuwenden ist.

7. Konfigurationsverfahren nach einem beliebigen der Ansprüche 1 bis 6, das einen Schritt des Detektierens beinhaltet, dass eine zweite Vorrichtung für die Aktivierung des Routing-Protokolls bereits konfiguriert ist, wobei der Detektionsschritt zu einer Annullierung des Schritts des Sendens der zweiten Nachricht an diese zweite Vorrichtung führt.

8. Konfigurationsverfahren nach einem beliebigen der Ansprüche 1 bis 6, das einen Schritt des Detektierens beinhaltet, dass eine zweite Vorrichtung für die Aktivierung des Routing-Protokolls bereits konfiguriert ist, wobei der Detektionsschritt dazu führt, dass der Schritt des Sendens der zweiten Nachricht an diese zweite Vorrichtung aufrechterhalten wird, wobei die zweite Nachricht nur Informationen enthält, die von den Nachbarn der zweiten Vorrichtung verwendet werden können.

9. Konfigurationsverfahren nach einem beliebigen der Ansprüche 1 bis 8, wobei das Routing-Protokoll das BGP-Protokoll (Border Gateway Protocol) ist.

10. Computerprogramm (PROG), das Anweisungen umfasst, die bei Ausführung des Programms durch einen Computer die Schritte des Konfigurationsverfahrens nach einem beliebigen der Ansprüche 1 bis 9 ausführen.

11. Computerlesbares Speichermedium (7), auf dem ein Computerprogramm gespeichert ist, das Anweisungen zur Ausführung der Schritte des Konfigurationsverfahrens nach einem beliebigen der Ansprüche 1 bis 9 beinhaltet.

12. Vorrichtung (T11-T14, T21-T24, T31-T34) eines Netzwerks (R), das eine Vielzahl von Vorrichtungen beinhaltet und ein dynamisches Routing-Protokoll verwendet, wobei diese Vorrichtung, als erste Vorrichtung bezeichnet, Folgendes beinhaltet:
- ein Empfangsmodul (10), das dazu fähig ist, eine erste Steuernachricht zu empfangen, die Konfigurationselemente beinhaltet, die zur Aktivierung des dynamischen Routing-Protokolls in dem Netzwerk erforderlich sind, um seine Verwendung in dem Netzwerk wirksam zu machen;
- ein Konfigurationsmodul (11), das dazu angepasst ist, Parameter für den Aufbau von Sitzungen gemäß dem Protokoll, die von der ersten Vorrichtung verwendet werden, anhand von in der ersten Nachricht enthaltenen Konfigurationselementen zu konfigurieren; und
- ein Ausführungsmodul (12), das, wenn die in der ersten Nachricht enthaltenen Konfigurationselemente mindestens eine Anweisung zur Verwaltung von Sitzungen gemäß dem Protokoll in dem Netzwerk beinhalten, dazu konfiguriert ist, die mindestens eine Verwaltungsanweisung auszuführen;
- wobei die Vorrichtung **dadurch gekennzeichnet ist, dass** sie ein Verbreitungsmodul (13) beinhaltet, das aktiviert ist, wenn die in der ersten Nachricht enthaltenen Konfigurationselemente einen Befehl zur Verbreitung der Konfigurationselemente in dem Netzwerk beinhalten, wobei das Verbreitungsmodul dazu konfiguriert ist, in Übereinstimmung mit dem Verbreitungsbefehl mindestens eine zweite Steuernachricht an mindestens eine zweite Vorrichtung des Netzwerks zu senden, wobei diese zweite Steuernachricht alle oder einen Teil der in der ersten Nachricht enthaltenen Konfigurationselemente beinhaltet.

13. Kommunikationssystem (1) eines Netzwerks, das ein dynamisches Routing-Protokoll verwendet, wobei das System eine Vielzahl von Vorrichtungen (T11-T14, T21-T24, T31-T34) nach Anspruch 12 beinhaltet, die dazu fähig sind, mit der Aktivierung des Routing-Protokolls in dem Netzwerk verbundene Konfigurationselemente sukzessive zu verbreiten.

14. Kommunikationssystem (1) nach Anspruch 13, das ferner eine Steuereinheit (2) umfasst, die Folgendes beinhaltet:
- ein Generierungsmodul (2A), das dazu konfiguriert ist, eine Steuernachricht zu generieren, die Konfigurationselemente zur Aktivierung des dynamischen Routing-Protokolls in dem Netzwerk beinhaltet; und
- ein Sendemodul (2B), das dazu konfiguriert ist, die Steuernachricht an eine einzige Vorrichtung des Netzwerks nach Anspruch 12 zu senden.

15. System (1) nach Anspruch 13 oder 14, das ferner mindestens eine zusätzliche Vorrichtung (Text) umfasst, die dazu konfiguriert ist, das Anwenden der zweiten Steuernachricht, die von einer ersten Vorrichtung des Netzwerks empfangen wird, zu verweigern.

## Claims

1. Configuration method intended to be implemented in a network (R) comprising a plurality of devices (T) and using a dynamic routing protocol, this configuration method comprising:
- a step (E40, E80), carried out by a first device (T11, T21) of the network, of receiving a first command message (CMD, M1) comprising configuration elements required to activate the dynamic routing protocol in the network so as to operationalize use thereof in the network;
- a step (E50, E90), carried out by the first device, of configuring session establishment parameters in accordance with said protocol that are used by the first device, based on configuration elements contained in the first message; and
- if the configuration elements contained in the first message comprise at least one instruction for managing sessions in accordance with said protocol in the network, a step (E60, E110), carried out by the first device, of executing said at least one management instruction;
- the method being **characterized in that** it comprises, if the configuration elements contained in the first message comprise a directive to propagate the configuration elements in the network, a step (E70, E120), carried out by the first device in accordance with said propagation directive, of sending at least one second command message (M1, M2) to at least one second device (T21, T31) of the network, this second command message comprising all or some of the configuration elements contained in the first message.

2. Configuration method according to Claim 1, wherein the execution step furthermore comprises a step (E70, E120) of establishing at least one session, in accordance with said routing protocol, with said at least one second device.

3. Configuration method according to Claim 2, wherein said at least one second message is a message for establishing a session in accordance with said routing protocol.

4. Configuration method according to any one of Claims 1 to 3, wherein said at least one session management instruction comprises at least one directive from among:
- a directive to establish a session, in accordance with said routing protocol, with all of the devices of the network in direct connection;
- a directive to establish a session, in accordance with said routing protocol, with all of the devices of the network in direct connection via a predetermined interface;
- a directive, intended to be applied by at least one device of the network, to establish a session, in accordance with said routing protocol, with all of the devices of the network in direct connection and which belong to one and the same hierarchical level in the network; and
- a directive to establish a session, in accordance with said routing protocol, with at least one device whose routing identifier is contained in said directive.

5. Configuration method according to any one of Claims 1 to 4, wherein the configuration elements contained in the first message comprise a number of an autonomous system to be used by the first device and/or at least one predefined range of values for selecting numbers of autonomous systems able that can be used by devices of the network.

6. Configuration method according to any one of Claims 1 to 5, wherein the configuration elements contained in the first message furthermore comprise at least one element from among:
- a cluster size for at least one hierarchical level of the network;
- a type of routes to be advertised via the routing protocol;
- a list of route reflector locators used, where applicable, in the network;
- a BGP confederation autonomous systems identifier; and
- at least one timer value to be applied during sessions in accordance with said routing protocol.

7. Configuration method according to any one of Claims 1 to 6, comprising a step of detecting that a said second device is already configured to activate the routing protocol, said detection step leading to the step of sending the second message to this second device being cancelled.

8. Configuration method according to any one of Claims 1 to 6, comprising a step of detecting that a said second device is already configured to activate the routing protocol, said detection step leading to the step of sending the second message to this second device being maintained, the second message containing only information able to be used by the neighbours of the second device.

9. Configuration method according to any one of Claims 1 to 8, wherein said routing protocol is the BGP (Border Gateway Protocol) protocol.

10. Computer program (PROG) comprising instructions for executing the steps of the configuration method according to any one of Claims 1 to 9 when said program is executed by a computer.

11. Computer-readable recording medium (7) on which there is recorded a computer program comprising instructions for executing the steps of the configuration method according to any one of Claims 1 to 9.

12. Device (T11-T14, T21-T24, T31-T34) of a network (R) comprising a plurality of devices and using a dynamic routing protocol, this device, referred to as first device, comprising:
- a reception module (10) able to receive a first command message comprising configuration elements required to activate the dynamic routing protocol in the network so as to operationalize use thereof in the network;
- a configuration module (11) designed to configure session establishment parameters in accordance with said protocol that are used by the first device, based on configuration elements contained in the first message; and
- an execution module (12) configured, if the configuration elements contained in the first message comprise at least one instruction for managing sessions in accordance with said protocol in the network, to execute said at least one management instruction;
- said device being **characterized in that** it comprises a propagation module (13), activated if the configuration elements contained in the first message comprise a directive to propagate the configuration elements in the network, said propagation module being configured to send at least one second command message to at least one second device of the network in accordance with said propagation directive, this second command message comprising all or some of the configuration elements contained in the first message.

13. Communication system (1) for a network using a dynamic routing protocol, said system comprising a plurality of devices (T11-T14, T21-T24, T31-T34) according to Claim 12, able to propagate, step-by-step, configuration elements linked to the activation of the routing protocol in the network.

14. Communication system (1) according to Claim 13, furthermore comprising a controller (2) comprising:
- a generation module (2A), configured to generate a command message comprising configuration elements for activating the dynamic routing protocol in the network; and
- a sending module (2B), configured to send said command message to a single device of the network in accordance with Claim 12.

15. System (1) according to Claim 13 or 14, furthermore comprising at least one additional device (Text) configured to deny the application of said second command message received from a said first device of the network.
